# EUROPEAN PATENT SPECIFICATION

(11) **EP 4 250 811 B1**
(45) Date of publication and mention of the grant of the patent: **21.05.2025**
(21) Application number: 21909422.4
(22) Date of filing: 21.12.2021
(51) Int. Cl.: H04W 28/06, H04L 69/00

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 23.12.2020 CN 202011541715
(43) Date of publication of application: 27.09.2023
(73) Proprietor: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); LI, Yunbo, Shenzhen, Guangdong 518129 (CN); GAN, Ming, Shenzhen, Guangdong 518129 (CN)
(74) Representative: Pfenning, Meinig & Partner mbB
(86) International application number: PCT/CN2021/140242
(87) International publication number: WO 2022/135426

(56) References cited:
- CN-A- 111 866 843
- US-A1- 2014 064 261
- US-A1- 2020 052 832
- EDWARD AU (HUAWEI): "Specification Framework for TGbe", vol. 802.11 EHT; 802.11be, no. 21, 3 December 2020 (2020-12-03), pages 1 - 100, XP068175382, Retrieved from the Internet <URL:https://mentor.ieee.org/802.11/dcn/19/11-19-1262-21-00be-specification-framework-for-tgbe.docx> [retrieved on 20201203]
- TIANYU WU (APPLE): "Minutes for TGbe PHY Ad-Hoc CC Nov 2020 to Jan 2021", vol. 802.11 EHT; 802.11be, no. 4, 1 December 2020 (2020-12-01), pages 1 - 38, XP068175320, Retrieved from the Internet <URL:https://mentor.ieee.org/802.11/dcn/20/11-20-1767-04-00be-minutes-for-tgbe-phy-ad-hoc-cc-nov-2020-to-jan-2021.docx> [retrieved on 20201201]
- SAMEER VERMANI (QUALCOMM): "Reserved Bit Behavior for EHT", vol. 802.11 EHT; 802.11be, 10 November 2020 (2020-11-10), pages 1 - 17, XP068175053, Retrieved from the Internet <URL:https://mentor.ieee.org/802.11/dcn/20/11-20-1829-00-00be-reserved-bit-behavior-for-eht.pptx> [retrieved on 20201110]
- INTEL CORPORATION: "Channel Access Mechanism for NR-unlicensed", 3GPP TSG RAN WG1 MEETING #98BIS, R1-1910640, 20 October 2019 (2019-10-20), XP051789432

## Description

### TECHNICAL FIELD

The present invention relates to the field of communication technologies, and in particular, to a communication method and apparatus, and a system.

### BACKGROUND

A conventional wireless local area network (wireless local area network, WLAN) communication system has developed for multiple generations starting from the 802.11a/b/g standard, such as the 802.11n standard, the 802.11ac standard, the 802.11ax standard, and the 802.11be standard. Based on the foregoing standards, a transmitting device may communicate with a receiving device using a physical protocol data unit (physical layer protocol data unit, PPDU).

For example, for the 802.11be standard, a PPDU may include fields such as a universal signal field (universal signal field, U-SIG) and an extremely high throughput signal field (extremely high throughput signal field, EHT-SIG). The EHT-SIG field may include a legacy common field (common field) and a legacy user specific field (user specific field).

At present, with the advancement of the standard, the 802.11be standard has initiated some discussions about a release 1 (Release 1, R1) device and a release 2 (Release 2, R2) device for EHT, aiming to divide the technical research into two phases. The R1 device may be a device meeting requirements of technical protocols in the first phase. The R2 device is a device supporting, due to the introduction of new features, more features and functions, such as hybrid automatic repeat request (hybrid automatic repeat request, HARQ), multi access points (multi access point, multi-AP), extended multiple resource unit combination, fast link adaptation, and low latency configuration.

However, in the 802.11be standard, there are not many reserved bits available in the U-SIG field and the legacy common field and the legacy user specific field in the EHT-SIG field. For example, currently, in the U-SIG field, there are 5 available bits of a disregard (disregard) field, and 3 available bits of a validate (validate) field, of which some bits have other reservation purposes. There are 4 available bits of a disregard field in the legacy common field in the EHT-SIG field. For the legacy user field, there is one bit reserved in a non-multi-user multiple-input multiple-output (non multi-user multiple-input multiple-output, non-MU-MIMO) mode, but no bits reserved in a MU-MIMO mode.

In the case of a small number of reserved bits for available signaling in the existing PPDU field how to support an R2 device with numerous features and functions is an urgent technical problem to be resolved.

Au, Edward (Huawei): "Specification Framework for TGbe", IEEE DRAFT, 11,19,1262,21,00BE-SPECIFICATION-FRAMEWORK-FORG-TGBE, IEEE-SA MENTOR, Piscataway, NJ, USA, provides a specification framework for TGBe.

### SUMMARY

In view of this, this application provides a communication method and apparatus, computer-readable storage medium and a computer program product according to the independent claims, to support an R2 device with numerous features and functions in the case of a small number of reserved bits for available signaling in an existing PPDU field.

According to a first aspect, an embodiment of this application provides a communication method. The method includes: A first device receives a physical layer protocol data unit PPDU, where the PPDU includes an extended function field indicating configuration information of a first feature of an R2 device, the first feature is a feature supported by the R2 device but not supported by an R1 device, and the first device parses the PPDU. When the first device is the R2 device, the R2 device determines the configuration information of the first feature of the R2 device by parsing the extended function field. According to a second aspect, an embodiment of this application provides a communication method. The method includes: A second device generates a physical layer protocol data unit PPDU, where the PPDU includes an extended function field indicating configuration information of a first feature of an R2 device, the first feature is a feature supported by the R2 device but not supported by an R1 device, and the second device sends the PPDU.

Based on the first aspect and the second aspect, a second device adds the extended function field to the PPDU. This allows the R2 device to determine the configuration information of the first feature of the R2 device based on the extended function field, so as to configure the first feature. In this embodiment of this application, the R2 device with numerous features and functions can be well supported via the introduction of the extended function field.

The PPDU further includes a legacy common field and a legacy user field. The legacy common field is for parsing the legacy user field. The legacy user field indicates configuration information of a second feature. The second feature is a feature supported by both the R1 device and the R2 device. The legacy user field is determined by parsing the legacy common field. The configuration information of the second feature is determined by parsing the legacy user field.

Based thereon, the second feature supported by both the R1 device and the R2 device is carried in the legacy user field, and the first feature supported by the R2 device but not supported by the R1 device is carried in the extended function field. This can ensure that the R2 device with numerous features and functions can be better supported while the R1 device works normally.

In a possible design, the extended function field is an extended feature field including an extended common subfield. The extended common subfield includes first indication information indicating whether the first feature exists and common feature indication information indicating common configuration information of the first feature. Whether the first feature exists is determined by parsing the first indication information. The common configuration information of the first feature is determined by parsing the common feature indication information.

Based on this possible design, the second device may indicate, to the R2 device via the first indication information, whether the first feature exists. If the first feature exists, the R2 device may continue to configure the first feature based on the common feature indication information. If the first feature does not exist, the R2 device may not continue to parse the common feature indication information. This can reduce power consumption of the R2 device.

In a possible design, the extended function field is an extended feature field including an extended common subfield. The extended common subfield includes second indication information indicating whether the R2 device configures the first feature and common feature indication information indicating common configuration information of the first feature. Whether the R2 device configures the first feature is determined by parsing the second indication information. The common configuration information of the first feature is determined by parsing the common feature indication information.

Based on this possible design, the second device may indicate, to the R2 device via the second indication information, whether the R2 device configures the first feature. If the R2 device is indicated to configure the first feature, the R2 device may continue to configure the first feature based on the common feature indication information. If the R2 device is indicated not to configure the first feature, the R2 device may not continue to parse the common feature indication information. This reduces power consumption of the R2 device.

In a possible design, the extended function field is an extended feature field including an extended common subfield. The extended common subfield includes first indication information indicating whether the first feature exists, second indication information indicating whether the R2 device configures the first feature, and common feature indication information indicating common configuration information of the first feature. Whether the first feature exists is determined by parsing the first indication information. Whether the R2 device configures the first feature is determined by parsing the second indication information. The common configuration information of the first feature is determined by parsing the common feature indication information.

Based on this possible design, the second device may indicate, to the R2 device via the first indication information, whether the first feature exists; and indicate, to the R2 device via the second indication information, whether the R2 device configures the first feature. If the R2 device is indicated to configure the first feature and the first feature exists, the R2 device may continue to configure the first feature based on the common feature indication information; otherwise, the R2 device may not continue to parse the common feature indication information. This reduces power consumption of the R2 device.

In a possible design, the extended function field is an extended feature field including an extended user subfield. The extended user subfield includes identification information indicating the R2 device and user feature indication information indicating the configuration information of the first feature of the R2 device indicated by the identification information. The R2 device is determined by parsing the identification information. The configuration information of the first feature of the R2 device indicated by the identification information is determined by parsing the user feature indication information.

Based on this possible design, the R2 device may determine an extended user subfield of the R2 device based on the identification information in the extended user subfield, and configure a first identifier of the R2 device based on the user feature indication information in the extended user subfield. This provides a feasible solution for the R2 device to determine the extended user subfield of the R2 device from the extended user subfield of the PPDU.

In a possible design, the extended function field is an extended feature field including an extended user subfield. A device corresponding to the extended user subfield is sequentially the same as a device corresponding to the legacy user field. The device is an R1 device or an R2 device. The extended user subfield includes an extended user subfield of the R1 device and an extended user subfield of the R2 device. The extended user subfield of the R2 device includes user feature indication information indicating the configuration information of the first feature of the R2 device. The configuration information of the first feature of the R2 device is determined by parsing the user feature indication information.

In a possible design, a device corresponding to at least one extended user subfield is sequentially a device corresponding to at least one legacy user field.

Based on the foregoing two possible designs, extended user subfields corresponding to devices may be sequentially set based on a sequence of devices corresponding to legacy user fields. In this way, the R2 device may determine a location of the extended user subfield of the R2 device in the extended user subfield of the PPDU based on a location of a legacy user field of the R2 device in the legacy user field of the PPDU. This provides another feasible solution for the R2 device to determine the extended user subfield of the R2 device from the extended user subfield of the PPDU.

In a possible design, the extended function field is an extended feature field including an extended user subfield. The extended user subfield includes location information and user feature indication information. The user feature indication information indicates the configuration information of the first feature of the R2 device. The location information indicates a location of a legacy user field corresponding to the extended user subfield in the legacy user field. The extended user subfield and the legacy user field corresponding to the extended user subfield correspond to a same R2 device. The configuration information of the first feature of the R2 device is determined by parsing the user feature indication information. The location of the legacy user field corresponding to the extended user subfield in the legacy user field is determined by parsing the location information. Alternatively, the user feature indication information indicates the configuration information of the first feature of the R2 device. The location information indicates a location of a resource unit corresponding to the extended user subfield. The extended user subfield and the resource unit corresponding to the extended user subfield correspond to a same R2 device. The configuration information of the first feature of the R2 device is determined by parsing the user feature indication information. The location of the resource unit corresponding to the extended user subfield is determined by parsing the location information.

Based on this possible design, the location of the legacy user field corresponding to the extended user subfield in the legacy user field of the PPDU may be determined based on the location information, so that the R2 device is identified based on the legacy user field. Alternatively, the location of the resource unit corresponding to the extended user subfield is determined based on the location information, so that the R2 device is identified based on the resource unit. This provides another feasible solution for the R2 device to determine an extended function subfield of the R2 device from an extended function subfield of the PPDU.

In a possible design, the extended user subfield further includes third indication information indicating whether the R2 device configures the first feature based on the user feature indication information. Whether the R2 device configures the first feature based on the user feature indication information is determined by parsing the third indication information.

Based on this possible design, the second device may indicate, to the R2 device via the third indication information, whether the R2 device configures the first feature based on the user feature indication information. If the R2 device is indicated to configure the first feature based on the user feature indication information, the R2 device may continue to configure the first feature based on the user feature indication information; otherwise, the R2 device may not continue to parse the user feature indication information. This reduces power consumption of the R2 device.

In a possible design, the extended function field is an extended feature field including an extended common subfield and an extended user subfield. The extended common subfield is for parsing the extended user subfield. The extended user subfield is determined by parsing the extended common subfield.

Based on this possible design, the extended feature field may include both an extended common subfield and the extended user subfield. Therefore, the R2 device with numerous features and functions can be better supported via the introduction of the extended common subfield and the extended user subfield.

In a possible design, the extended common subfield includes one or more of the following: common feature indication information, first indication information, second indication information, fourth indication information, and fifth indication information. The common feature indication information indicates common configuration information of the first feature. The first indication information indicates whether the first feature exists. The second indication information indicates whether the R2 device configures the first feature. The fourth indication information indicates a type of the extended user subfield. The fifth indication information indicates whether the extended user subfield of the R2 device is present. The common configuration information of the first feature is determined by parsing the common feature indication information. Whether the first feature exists is determined by parsing the first indication information. Whether the R2 device configures the first feature is determined by parsing the second indication information. The type of the extended user subfield is determined by parsing the fourth indication information. Whether the extended user subfield of the R2 device is present is determined by parsing the fifth indication information.

Based on this possible design, the extended common subfield may further include one or more of the foregoing information. This increases design flexibility of the extended common subfield, so that the R2 device with numerous features and functions can be better supported.

In a possible design, the extended common subfield further includes first common user information indicating the common configuration information of the R2 device corresponding to the extended user subfield. The common configuration information of the R2 device corresponding to the extended user subfield is determined by parsing the first common user information.

Based on this possible design, signaling overheads can be reduced by carrying, in the extended common subfield, the common configuration information of the R2 device corresponding to the extended user subfield.

In a possible design, the extended function field is an extended user field including identification information and user feature indication information. The identification information indicates an R2 device. The user feature indication information indicates the configuration information of the first feature of the R2 device indicated by the identification information. The R2 device is determined by parsing the identification information. The configuration information of the first feature of the R2 device indicated by the identification information is determined by parsing the user feature indication information.

Based on this possible design, the R2 device may determine an extended user field of the R2 device based on the identification information in the extended user field, and configure a first identifier of the R2 device based on the user feature indication information in the extended user field. This provides a feasible solution for the R2 device to determine the extended user field of the R2 device from the extended user field of the PPDU.

In a possible design, the extended function field is an extended user field. A device corresponding to the extended user field is sequentially a device corresponding to the legacy user field. The device is an R1 device or an R2 device. The extended user field includes an extended user field of the R1 device and an extended user field of the R2 device. The extended user field of the R2 device includes user feature indication information indicating the configuration information of the first feature of the R2 device. The configuration information of the first feature of the R2 device is determined by parsing the user feature indication information.

In a possible design, a device corresponding to at least one extended user field is sequentially a device corresponding to at least one legacy user field.

Based on the foregoing two possible designs, extended user fields corresponding to devices may be sequentially set based on a sequence of devices corresponding to legacy user fields. In this way, the R2 device may determine a location of the extended user field of the R2 device in the extended user field of the PPDU based on a location of a legacy user field of the R2 in the legacy user field of the PPDU. This provides another feasible solution for the R2 device to determine an extended function field of the R2 device from the extended function field of the PPDU.

In a possible design, the extended function field is an extended user field including location information and user feature indication information. The user feature indication information indicates the configuration information of the first feature of the R2 device. The location information indicates a location of a legacy user field corresponding to the extended user field in the legacy user field. The extended user field and the legacy user field corresponding to the extended user field correspond to a same R2 device. The configuration information of the first feature of the R2 device is determined by parsing the user feature indication information. The location of the legacy user field corresponding to the extended user field in the legacy user field is determined by parsing the location information. Alternatively, the user feature indication information indicates the configuration information of the first feature of the R2 device. The location information indicates a location of a resource unit corresponding to the extended user field. The extended user field and the resource unit corresponding to the extended user field correspond to a same R2 device. The configuration information of the first feature of the R2 device is determined by parsing the user feature indication information. The location of the resource unit corresponding to the extended user field is determined by parsing the location information.

Based on this possible design, the location of the legacy user field corresponding to the extended user field in the legacy user field of the PPDU may be determined based on the location information, so that the R2 device is identified based on the legacy user field. Alternatively, the location of the resource unit corresponding to the extended user field is determined based on the location information, so that the R2 device is identified based on the resource unit. This provides another feasible solution for the R2 device to determine an extended function field of the R2 device from the extended function field of the PPDU.

In a possible design, the extended user field further includes third indication information indicating whether the R2 device configures the first feature based on the user feature indication information. Whether the R2 device configures the first feature based on the user feature indication information is determined by parsing the third indication information.

Based on this possible design, the second device may indicate, to the R2 device via the third indication information, whether the R2 device configures the first feature based on the user feature indication information. If the R2 device is indicated to configure the first feature based on the user feature indication information, the R2 device may continue to configure the first feature based on the user feature indication information; otherwise, the R2 device may not continue to parse the user feature indication information. This reduces power consumption of the R2 device.

In a possible design, the extended function field is located in a padding area in an EHT-SIG field of the PPDU.

Based on this possible design, the extended function field is set in the padding area in the EHT-SIG field of the PPDU. In this way, the R1 device considers the extended function field as a padding field, and therefore does not need to parse the extended function field. This ensures that the R1 device works normally.

In a possible design, the receiving a PPDU includes: receiving, through at least two content channels, the PPDU carrying the EHT-SIG field. The extended function field is located after a last legacy user field in the EHT-SIG field with a longer legacy user specific field in the at least two content channels. The EHT-SIG field includes a legacy user specific field, and the legacy user specific field includes the legacy user field. Alternatively, the extended function field is located after a last legacy user field in the EHT-SIG field in each of the at least two content channels.

Based on this possible design, sending the PPDU through the at least two content channels provides a feasible solution to location setting for the extended function field of the PPDU.

In a possible design, an OFDM symbol on which a start location of the extended function field is located and an OFDM symbol on which an end location of the last legacy user field of the PPDU is located are separated by N OFDM symbols.

Based on this possible design, this provides another feasible solution to location setting for the extended function field of the PPDU.

In a possible design, a padding field in the EHT-SIG field of the PPDU further includes eighth indication information indicating whether the PPDU includes the extended function field. Whether the PPDU includes the extended function field is determined by parsing the eighth indication information.

Based on the possible type, the second device indicates, via the eighth indication information, whether the PPDU includes the extended function field. If it indicates that the PPDU includes the extended function field, the R2 device may continue to parse the subsequent extended function field; otherwise, the R2 device may not continue to parse the subsequent extended function field. This reduces power consumption of the R2 device.

In a possible design, a U-SIG field of the PPDU includes ninth indication information indicating a type of the extended function field. The type of the extended function field is determined by parsing the ninth indication information.

Based on this possible design, the type of the extended function field may include information such as a field type and a field length of the extended function field. The type of the extended function field may be determined based on the ninth indication information, allowing the R2 device to parse the extended function field based on the type of the extended function field. This improves a parsing success rate.

In a possible design, the legacy user field of the PPDU includes the legacy user field of the R2 device. The legacy user field of the R2 device includes location information indicating a location of the extended function field of the R2 device in the extended function field. The location of the extended function field of the R2 device in the extended function field is determined by parsing the location information.

Based on this possible design, a definition of the legacy user field of the R2 device may be modified, and the location of the extended function field of the R2 device in the extended function field of the PPDU is indicated based on the location information. The R2 device with numerous performance and functions can be better supported.

In a possible design, the legacy user field of the R2 device further includes tenth indication information indicating whether the extended function field includes the extended function field of the R2 device. Whether the extended function field includes the extended function field of the R2 device is determined by parsing the tenth indication information.

According to the possible design, the tenth indication information indicates whether the extended function field includes the extended function field of the R2 device. If the extended function field includes the extended function field of the R2 device, the R2 device may continue to parse the subsequent extended function field; otherwise, the R2 device may not continue to parse the subsequent extended function field. This reduces power consumption of the R2 device.

According to a third aspect, an embodiment of this application provides a communication apparatus, including a transceiver module and a processing module. The transceiver module is configured to receive a physical layer protocol data unit PPDU. The PPDU includes an extended function field indicating configuration information of a first feature of an R2 device. The first feature is a feature supported by the R2 device but not supported by an R1 device. The first device parses the PPDU. When the first device is the R2 device, the processing module is configured to determine the configuration information of the first feature of the R2 device by parsing the extended function field.

It should be noted that for specific descriptions of the PPDU in the third aspect, refer to related descriptions of the PPDU in the communication method provided in any one of the first aspect or the possible designs of the first aspect. For specific implementations of the communication apparatus in the third aspect, refer to behavior functions of the first device in the communication method provided in any one of the first aspect or the possible designs of the first aspect. Details are not described again.

According to a fourth aspect, an embodiment of this application provides a communication apparatus, including a processing module and a transceiver module. The processing module is configured to generate a physical layer protocol data unit PPDU. The PPDU includes an extended function field indicating configuration information of a first feature of an R2 device. The first feature is a feature supported by the R2 device but not supported by an R1 device. The transceiver module is configured to send the PPDU.

It should be noted that, for specific descriptions of the PPDU in the fourth aspect, refer to related descriptions of the PPDU in the communication method provided in any one of the second aspect or the possible designs of the second aspect. For specific implementations of the communication apparatus in the fourth aspect, refer to behavior functions of the second device in the communication method provided in any one of the second aspect or the possible designs of the second aspect. Details are not described again.

According to a fifth aspect, an embodiment of this application provides a computer-readable storage medium, configured to store a computer program. The computer program includes instructions for performing any one of the first aspect or the possible implementations of the first aspect, or includes instructions for performing any one of the second aspect or the possible implementations of the second aspect.

According to a sixth aspect, an embodiment of this application provides a computer program product. The computer program product includes instructions for performing any one of the first aspect or the possible implementations of the first aspect, or includes instructions for performing any one of the second aspect or the possible implementations of the second aspect.

According to a seventh aspect, an embodiment of this application provides a communication system. The communication system includes the communication device described in the third aspect and the communication device described in the fourth aspect. (next paragraph: [0182])

### BRIEF DESCRIPTION OF DRAWINGS

FIG. 1a is a schematic diagram of a frame structure of an HE-SIG-B field according to an embodiment of this application;
FIG. 1b is a schematic diagram of a 20 MHz tone plan and RU locations according to an embodiment of this application;
FIG. 1c is a schematic diagram of a 40MHz tone plan and RU locations according to an embodiment of this application;
FIG. 1d is a schematic diagram of an 80MHz tone plan and RU locations according to an embodiment of this application;
FIG. 1e is a schematic diagram of a frame structure of an HE-SIG-B field according to an embodiment of this application;
FIG. If is a schematic diagram of a PPDU frame structure according to an embodiment of this application;
FIG. 1g is a schematic diagram of a PPDU frame structure according to an embodiment of this application;
FIG. 2 is a schematic diagram of a communication system according to an embodiment of this application;
FIG. 3 is a flowchart of a communication method according to an embodiment of this application;
FIG. 4 is a schematic diagram of a PPDU frame structure according to an embodiment of this application;
FIG. 5 is a schematic diagram of a PPDU frame structure according to an embodiment of this application;
FIG. 6 is a schematic diagram of a PPDU frame structure according to an embodiment of this application;
FIG. 7 is a schematic diagram of a PPDU frame structure according to an embodiment of this application;
FIG. 8 is a schematic diagram of a PPDU frame structure according to an embodiment of this application;
FIG. 9 is a schematic diagram of a PPDU frame structure according to an embodiment of this application;
FIG. 10 is a schematic diagram of a PPDU frame structure according to an embodiment of this application;
FIG. 11 is a schematic diagram of a PPDU frame structure according to an embodiment of this application;
FIG. 12 is a schematic diagram of a PPDU frame structure according to an embodiment of this application;
FIG. 13 is a schematic diagram of a PPDU frame structure according to an embodiment of this application;
FIG. 14 is a schematic diagram of a PPDU frame structure according to an embodiment of this application;
FIG. 15 is a schematic diagram of a PPDU frame structure according to an embodiment of this application;
FIG. 16 is a schematic diagram of a PPDU frame structure according to an embodiment of this application;
FIG. 17 is a schematic diagram of a PPDU frame structure according to an embodiment of this application;
FIG. 18 is a schematic diagram of a PPDU frame structure according to an embodiment of this application;
FIG. 19 is a schematic diagram of a communication apparatus according to an embodiment of this application; and
FIG. 20 is a schematic diagram of a communication apparatus according to an embodiment of this application.

### DESCRIPTION OF EMBODIMENTS

Before embodiments of this application are described, terms used in embodiments of this application are described as follows.

Wireless local area network (wireless local area network, WLAN) communication system: It has developed for multiple generations starting from the 802.11a/b/g standard, such as the 802.11n standard, the 802.11 ac standard, the 802.11ax standard, and the 802.11be standard.

The 802.11n standard may also be referred to as a high throughput (high throughput, HT) standard. The 802.11 ac standard may also be referred to as a very high throughput (very high throughput, VHT) standard. The 802.11 ax standard may be referred to as a high efficiency (high efficiency, HE) standard, or may be referred to as the sixth generation wireless fidelity (the sixth wireless fidelity, Wi-Fi 6) standard. The 802.11be standard may be referred to as an extremely high throughput (extremely high throughput, EHT) standard, or may be referred to as the Wi-Fi 7 standard. Standards before the HT standard, such as 802.11a/b/g, may be collectively referred to as non-high throughput (non-high throughput, Non-HT) standards.

In the WLAN communication system, a transmitting device may communicate with a receiving device by sending a physical protocol data unit (physical layer protocol data unit, PPDU) to the receiving device.

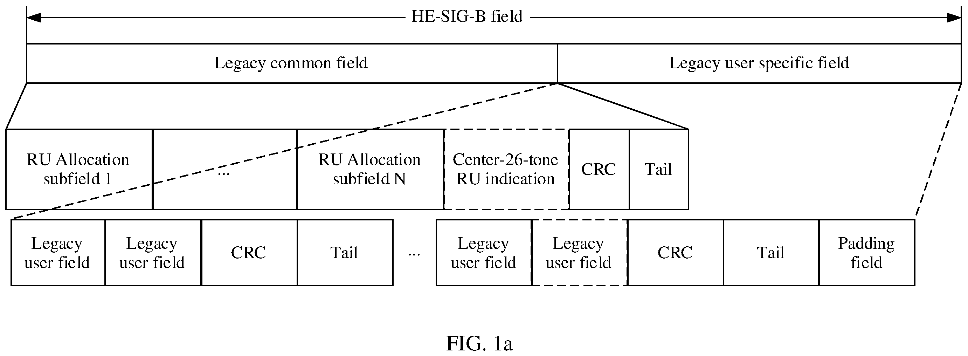

For example, in the 802.11ax standard, as shown in FIG. 1a, a PPDU may include a high efficiency signal field B (high efficiency signal field B, HE-SIG-B). The field may include a legacy common field (common field), a legacy user specific field (user specific field).

As shown in FIG. 1a, the legacy common field may include resource unit allocation subfields (resource unit allocation subfield, RU allocation subfield) 1 to N, a center-26-tone RU indication (center-26-tone RU indication) field, a cyclic redundancy code (cyclic redundancy code, CRC) field, and a tail (Tail) field. A receiving device may determine a legacy user field of the receiving device from at least one legacy user field in the legacy user specific field based on the resource unit allocation subfields. The CRC field is for checking, and the tail field is for cyclic decoding. It should be noted that the foregoing center-26-tone RU indication field is present in the case of a bandwidth greater than or equal to 80 MHz.

As shown in FIG. 1a, the legacy user specific field may include 1 to M legacy user fields (user field) based on an allocation sequence of resource units. In the M legacy user fields, usually every two of the legacy user fields form one group, followed by a CRC field and a tail field. However, it should be noted that there may be one or two legacy user fields in the last group. Following the tail field, the legacy user specific field may further include a padding (padding) field. A bit value in the padding field is not limited, and may be set to any value.

For example, in the 802.11ax standard, the PPDU may further include an HE-SIG-A field. The HE-SIG-A field may include a 4-bit number of HE-SIG-B symbols or multi-user multiple-input multiple-output (multi-user multiple-input multiple-output, MU-MIMO) users (number of HE-SIG-B symbols or MU-MIMO users) field, to indicate a length of the HE-SIG-B field. For example, the length of the HE-SIG-B field may be set to 1 to 16 orthogonal frequency division multiplexing (orthogonal frequency division multiplexing, OFDM) symbols. In some cases, more OFDM symbols may be supported in combination with a number of user fields. This is not limited.

Further, after receiving the PPDU including the HE-SIG-A field and the HE-SIG-B field, the receiving device may determine a length of the legacy user specific field and a length of the padding field in the legacy user specific field based on the HE-SIG-A field and the legacy common field in the HE-SIG-B field; and determine the legacy user field of the receiving device from the 1 to M legacy user fields in the legacy user specific field based on the resource unit allocation subfields in the legacy common field.

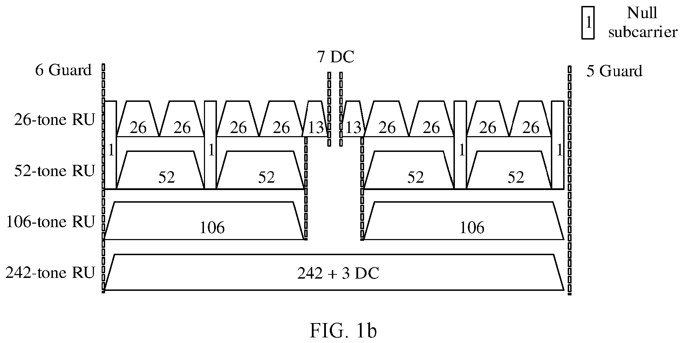

In the 802.11ax standard, as shown in FIG. 1b, in the case of a 20 MHz data packet bandwidth, the entire bandwidth is constituted by an entire 242-tone resource unit (242-tone RU) or various combinations of 26-tone RUs, 52-tone RUs, and 106-tone RUs.

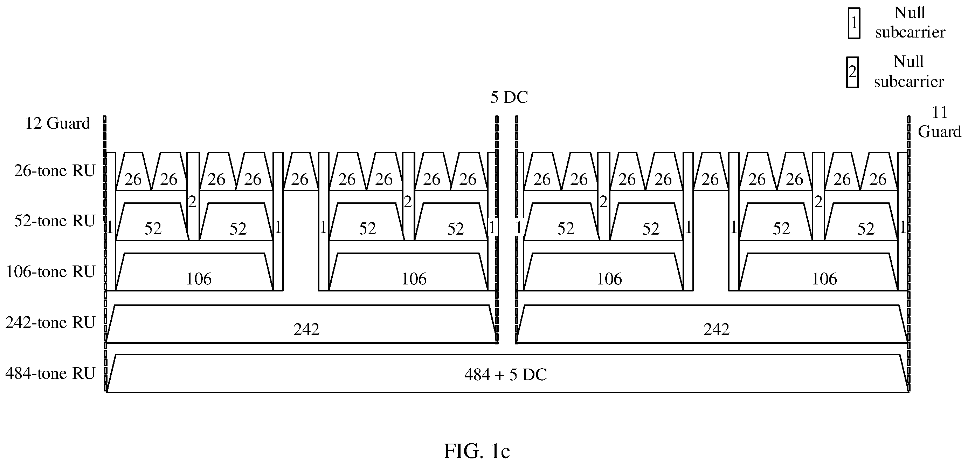

As shown in FIG. 1c, in the case of a 40 MHz data packet bandwidth, the entire bandwidth is approximately equivalent to two replications of a 20 MHz tone plan. The entire bandwidth is constituted by an entire 484-tone RU or various combinations of 26-tone RUs, 52-tone RUs, 106-tone RUs, and 242-tone RUs.

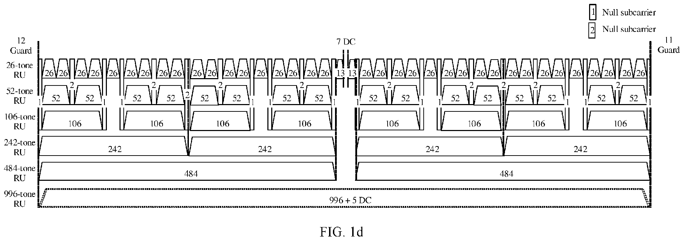

As shown in FIG. 1d, in the case of an 80 MHz data packet bandwidth, the entire bandwidth is constituted by four resource units on a 242-tone RU basis. Particularly, in the middle of the entire bandwidth, there is a center 26-tone RU including two 13-tone resource subunits. The entire bandwidth is constituted by an entire 996-tone RU or various combinations of 26-tone RUs, 52-tone RUs, 106-tone RUs, 242-tone RUs, and 484-tone RUs.

In addition, in the data packet bandwidth shown in FIG. 1b to FIG. 1d, in addition to the RUs for data transmission, one or more of the following subcarriers may be further included: guard (guard) subcarriers, null subcarriers, direct current (direct current, DC) subcarriers, and the like. This is not limited.

Based on FIG. 1b to FIG. 1d, it may be understood that in the case of a 160 MHz or 80+80 MHz data packet bandwidth, the entire bandwidth may be considered as two replications of an 80 MHz tone plan. The entire bandwidth is constituted by an entire 2*996-tone RU or various combinations of 26-tone RUs, 52-tone RUs, 106-tone RUs, 242-tone RUs, 484-tone RUs, and 996-tone RUs. Details are not described.

It should be noted that, based on the various tone plans for data packet bandwidths shown in FIG. 1b to FIG. 1d, on a 242-tone RU basis, the left side of the figure may be considered as a lowest frequency, and the right side of the figure may be considered as a highest frequency. From left to right, 242-tone RUs may be numbered as follows: 1^{st}, 2nd, ..., 8th. It should be noted that in a data field, eight 242-tone RUs and eight 20 MHz channels are in a one-to-one correspondence in the order of increasing frequency, but do not completely overlap in frequencies due to the existence of the center 26-tone RU.

The concept "content channel" (content channel, CC) is further introduced in the 802.11ax standard. In the case of an only 20 MHz data packet bandwidth, the HE-SIG-B field includes only one content channel. The content channel may include one resource unit allocation subfield indicating a resource unit allocation indication in a data portion on a 242-tone RU. A length of the resource unit allocation subfield may be 8 bits.

For example, the transmitting device may indicate all possible resource unit arrangements on the 242-tone RU through indexing. In addition, for an RU greater than or equal to 106 tones, a number of users for SU/MU-MIMO transmission on the RU is indicated through indexing.

For example, the following Table 1 is an index table of the resource unit allocation subfield. Each row in Table 1 represents an RU configuration. Most RU configurations in Table 1 are within 242-tone, and a few RU configurations indicate that the RU is a 242-tone RU, a 484-tone RU, or a 996-tone RU. That each 8-bit resource unit allocation subfield is for notifying an RU allocation in a corresponding range of 20 MHz may be described as follows: There is one resource unit allocation subfield for 20 MHz, two resource unit allocation subfields for 40 MHz, four resource unit allocation subfields for 80 MHz, and eight resource unit allocation subfields for 160 MHz.

**Table 1 Resource unit allocation subfield in 802.11ax**

| Resource unit allocation subfield (B7, B6, B5, B4, B3, B2, B1, B0) | #1 | #2 | #3 | #4 | #5 | #6 | #7 | #8 | #9 | Number of entries |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| 00010y₂y₁y₀ | 52 | | 52 | | - | 106 | | | | 8 |
| 00011y₂y₁y₀ | 106 | | | | - | 52 | | 52 | | 8 |
| 00100y₂y₁y₀ | 26 | 26 | 26 | 26 | 26 | 106 | | | | 8 |
| 00101y₂y₁y₀ | 26 | 26 | 52 | | 26 | 106 | | | | 8 |
| 00110y₂y₁y₀ | 52 | | 26 | 26 | 26 | 106 | | | | 8 |
| 00111y₂y₁y₀ | 52 | | 52 | | 26 | 106 | | | | 8 |
| 01000y₂y₁y₀ | 106 | | | | 26 | 26 | 26 | 26 | 26 | 8 |
| 01001y₂y₁y₀ | 106 | | | | 26 | 26 | 26 | 52 | | 8 |
| 01010y₂y₁y₀ | 106 | | | | 26 | 52 | | 26 | 26 | 8 |
| 01011y₂y₁y₀ | 106 | | | | 26 | 52 | | 52 | | 8 |
| 0110y₁y₀z₁z₀ | 106 | | | | - | 106 | | | | 16 |
| 01110000 | 52 | | 52 | | - | 52 | | 52 | | 1 |
| 01110001 | 242-tone RU empty (zero user) | | | | | | | | | 1 |
| 01110010 | 484-tone RU: contributes zero users to the legacy user specific field function in the HE-SIG-B content channel corresponding to the RU allocation subfield. | | | | | | | | | 1 |
| 01110011 | 996-tone RU: contributes 0 users to the legacy user specific field function in the HE-SIG-B content channel corresponding to the RU allocation subfield. | | | | | | | | | 1 |
| 011101x₁x₀ | Reserved | | | | | | | | | 4 |
| 01111y₂y₁y₀ | Reserved | | | | | | | | | 8 |
| 10y₂y₁y₀z₂z₁z₀ | 106 | | | | 26 | 106 | | | | 64 |
| 11000y₂y₁y₀ | 242 | | | | | | | | | 8 |
| 11001y₂y₁y₀ | 484 | | | | | | | | | 8 |
| 11010y₂y₁y₀ | 996 | | | | | | | | | 8 |
| 11011y₂y₁y₀ | Reserved | | | | | | | | | 8 |
| 111x₄x₃x₂x₁x₀ | Reserved | | | | | | | | | 32 |

It should be noted that an order of presence of users in the legacy user specific field is consistent with an order of RUs obtained through division in a corresponding resource unit allocation subfield. A user may identify, by reading a station identifier (station ID, STA ID) in a legacy user field, whether the legacy user field belongs to the user. If the legacy user field belongs to the user, the user may determine an RU allocation of the user based on a location of the legacy user field and a corresponding resource unit allocation subfield.

In addition, to effectively reuse resources, in the 802.11ax standard, content in the HE-SIG-B field may be represented using CC1 and CC2 in the case of a data packet bandwidth greater than or equal to 40 MHz.

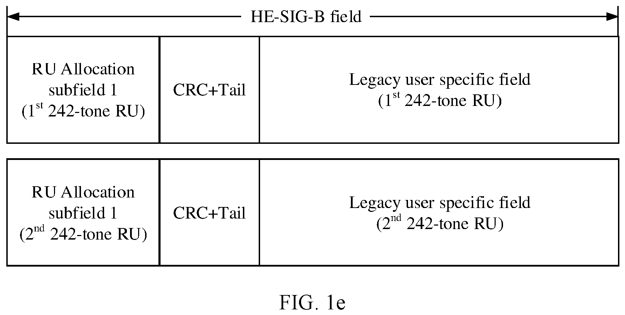

For example, as shown in FIG. 1e, in the case of the 40 MHz data packet bandwidth, there may be two HE-SIG-B content channels: CC1 and CC2. The 1^{st} HE-SIG-B CC1 may include a resource unit allocation subfield in the 1^{st} 242-tone RU and a corresponding legacy user specific field. The 2^{nd} HE-SIG-B CC2 may include a resource unit allocation subfield in the 2^{nd} 242-tone RU and a corresponding legacy user specific field.

For example, in the case of the 80 MHz data packet bandwidth, there may be two groups of content channels, each group of content channels includes CC1 and CC2, and there are four channels in total. The content channels indicate resource unit allocation information on the four channels in the following order of increasing frequencies: CC1, CC2, CC1, and CC2. CC1 includes resource unit allocation subfields in the 1^{st} 242-tone RU and the 3^{rd} 242-tone RU and legacy user specific fields corresponding to the 1^{st} 242-tone RU and the 3^{rd} 242-tone RU. CC2 includes resource unit subfields in the 2^{nd} 242-tone RU and the 4^{th} 242-tone RU and legacy user specific fields corresponding to the 2^{nd} 242-tone RU and the 4^{th} 242-tone RU.

It should be noted that, packet grouping in the case of a larger data packet bandwidth is similar to the foregoing cases of 40 MHz and 80 MHz. Details are not described.

In conclusion, it may be learned that both CC1 and CC2 display a part of content of the resource unit allocation subfield. By reading information from CC1 and CC2, a user may determine an RU allocation corresponding to each 20 MHz.

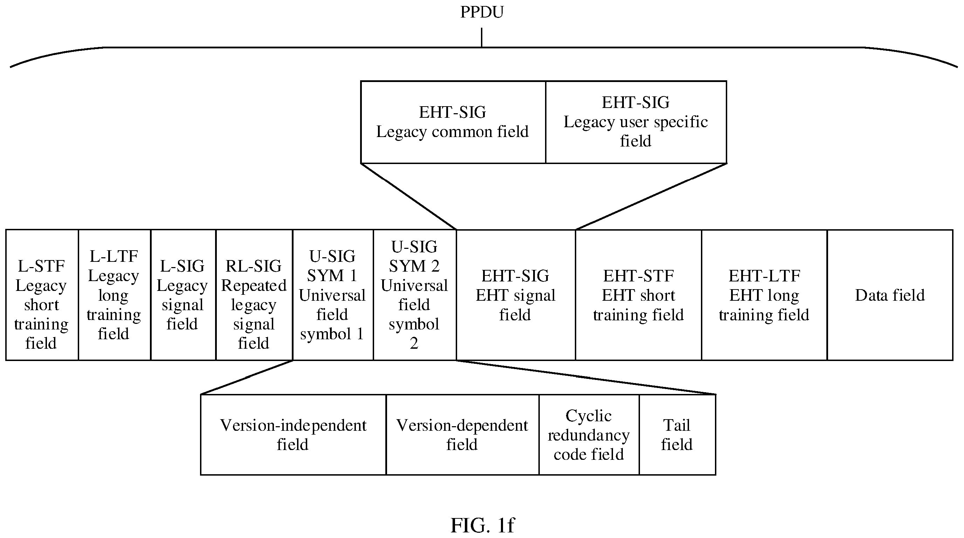

Similar to the HE-SIG-B field in the 802.11ax standard, as shown in FIG. 1f, the PPDU in the 802.11be standard may include the following fields: a legacy-short training field (legacy-short training field, L-STF), a legacy-long training field (legacy-long training field, L-LTF), a legacy-signal field (legacy-signal field, L-SIG), a repeated legacy-signal field (repeated legacy-signal field, RL-SIG), a universe field symbol 1 (U-SIG SYM1), a universe field symbol 2 (U-SIG SYM2), an extremely high throughput signal field (extremely high throughput signal field, EHT-SIG), and an ETH-STF field, an ETH-LTF field, and a data field.

The U-SIG field may include a version independent field, a version dependent field, a cyclic redundancy field, and a tail field. The EHT-SIG field may include a legacy common field and a legacy user specific field. The legacy user specific field may further include a padding (padding) field. A bit value in the padding field is not limited, and may be set to any value.

Specifically, in the 802.11be standard, a 5-bit number of EHT-SIG symbols (number of EHT-SIG symbols) field in the U-SIG field may indicate a number of OFDM symbols of the EHT-SIG field immediately following the U-SIG field, where up to 32 OFDM symbols may be indicated.

Further, after receiving the PPDU including the U-SIG field and the EHT-SIG field, the receiving device may determine a length of the legacy user specific field in the EHT-SIG field based on the U-SIG field and the legacy common field in the EHT-SIG field, determine a length of the padding field in the legacy user specific field based on a length of the user specific field and a length of the user field, and determine a legacy user field of the receiving device from a plurality of legacy user fields in the legacy user specific field based on a resource unit allocation subfield in the legacy common field.

It should be noted that, for specific descriptions that the receiving device determines a legacy user field of the receiving device from a plurality of legacy user fields in the legacy user specific field based on a resource unit allocation subfield in the legacy common field in the 802.11be standard, refer to related descriptions that the receiving device determines the legacy user field of the receiving device from the plurality of legacy user fields in the legacy user specific field based on the resource unit allocation subfield in the legacy common field in the 802.11ax standard. Details are not described.

At present, with the advancement of the standard, the 802.11be standard has initiated some discussions about a release 1 (Release 1, R1) device and a release 2 (Release 2, R2) device for EHT, aiming to divide the technical research into two phases. The R1 device may be a device meeting requirements of technical protocols in the first phase. The R2 device is a device supporting, due to the introduction of new features, more features and functions, such as hybrid automatic repeat request (hybrid automatic repeat request, HARQ), and multi access points (multi access point, multi-AP).

However, in the 802.11be standard, there are not many reserved bits available in the U-SIG field and the legacy common field and the legacy user specific field in the EHT-SIG field. For example, in the U-SIG field, there are 5 available bits of a disregard (disregard) field, and 3 available bits of a validate (validate) field, of which some bits have other reservation purposes. There are 4 available bits of a disregard field in the legacy common field in the EHT-SIG field. For the legacy user field, there is one bit reserved in a non-multi-user multiple-input multiple-output (non multi-user multiple-input multiple-output, non-MU-MIMO) mode, but no bits reserved in a MU-MIMO mode.

Each validate field has one bit. Upon reading the field, the R1 device stops subsequent reading if the one bit is not a value specified in the communication protocol. The disregard field means the R1 device does not need to care about a value of this field, as the value of this field makes no impact on operations of the R1 device.

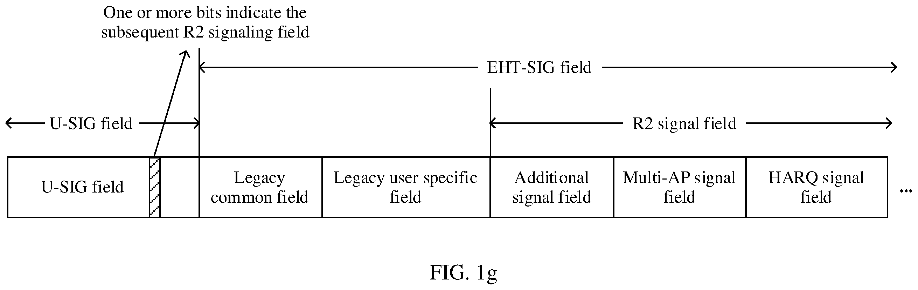

In the foregoing case of a small number of reserved bits for available signaling in the existing PPDU field, as shown in FIG. 1g, one or more bits in the U-SIG field may be used to indicate subsequent R2 signaling, and additional bits are added to the EHT-SIG field to indicate R2 signaling of an R2 device. The R2 signaling may be a field such as an additional signaling field, a multi-AP signaling field, and a HARQ signaling field.

For example, one bit in the U-SIG field indicates subsequent R2 signaling. The one bit may be set to 1 to indicate that the R2 signaling field of the R2 device is present following the EHT-SIG field, or the one bit is set to 0 to indicate that the R2 signaling field of the R2 device is not present following the EHT-SIG field.

However, the foregoing manner only provides a method for indicating whether the R2 signaling field of the R2 device is present in the PPDU, but does not provide design details of the R2 signaling field. Therefore, in the foregoing case of a small number of reserved bits for available signaling in the existing PPDU field, how to support an R2 device with numerous features and functions becomes a technical problem to be urgently resolved.

To resolve the foregoing technical problem, embodiments of this application provide a communication method. A first device may receive a PPDU including an extended common field and/or an extended function field, where the PPDU is sent by a second device, and parse the PPDU. When the first device is an R2 device, the R2 device may determine common configuration information of a first feature based on the extended common field; and determine configuration information of the first feature of the R2 device based on the extended function field. The first feature is a feature supported by the R2 device but not supported by an R1 device. In embodiments of this application, the extended common field and/or the extended function field are/is added to the PPDU, the common configuration information of the first feature is indicated by the extended common field, and the configuration information of the first feature of the R2 device is indicated by the extended function field. The R2 device with numerous features and functions can be well supported via the introduction of the extended common field and the extended function field.

The following describes implementations of embodiments of this application in detail with reference to accompanying drawings in this specification.

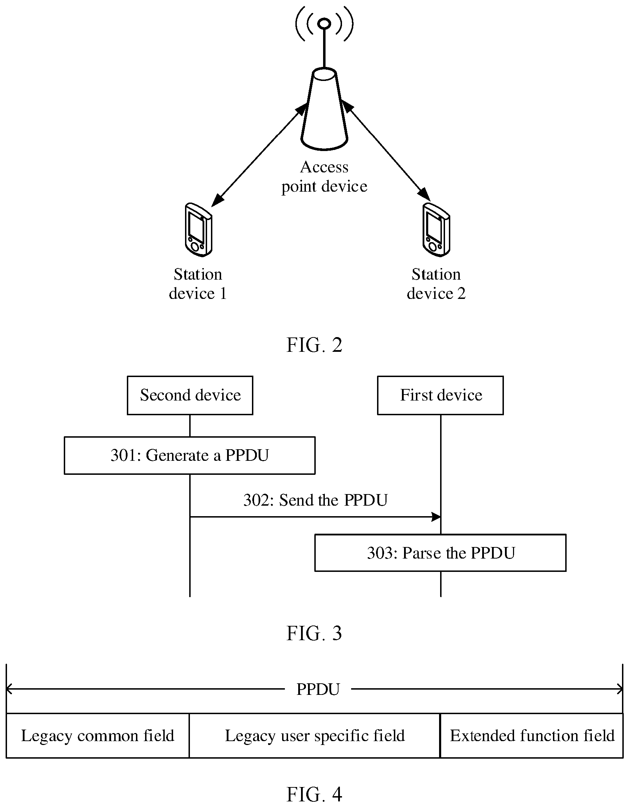

FIG. 2 is a schematic diagram of a communication system according to an embodiment of this application. As shown in FIG. 2, the communication system may include an access point device and a station device.

The access point device may be an access point (access point, AP), and the station device may be a station (station, STA).

For example, the AP may be a device supporting a plurality of WLAN standards such as the 802.11a/b/g standard, the 802.11n standard, the 802.11ac standard, the 802.11ax standard, and the 802.11be standard.

For example, the AP may be a terminal device or network device with a Wi-Fi chip. The AP may be an access point of a mobile user for accessing a wired network. The AP is mainly deployed in a home, inside a building, and inside a campus, with a typical coverage radius of tens of meters to hundreds of meters. Certainly, the AP may alternatively be deployed outdoors. The AP, equivalent to a bridge connecting the wired network and a wireless network, is mainly configured to connect wireless network clients to each other, and then connect the wireless network to the Ethernet. The AP may be a terminal device or a network device with a Wi-Fi chip.

For example, the STA may be a device supporting a plurality of WLAN standards such as the 802.11a/b/g standard, the 802.11n standard, the 802.11ac standard, the 802.11ax standard, and the 802.11be standard.

For example, the STA may be a wireless communication chip, a wireless sensor, or a wireless communication terminal. For example, the STA may be a device capable of Wi-Fi communication, for example, a mobile phone, a tablet computer, a set-top box, a smart television, a smart wearable device, a vehicle-mounted communication device, or a computer. This is not limited.

With reference to the communication system shown in FIG. 2, the following describes the communication method provided in embodiments of this application by using a PPDU in the 802.11be standard as an example. Refer to FIG. 3, a first device may be an access point device or a station device in the communication system shown in FIG. 2, and a second device may be any access point device or station device in the communication system shown in FIG. 2 other than the first device.

FIG. 3 is a flowchart of a communication method according to an embodiment of this application. As shown in FIG. 3, the method may include the following steps.

Step 301: A second device generates a PPDU.

As shown in FIG. 4, the PPDU may include an extended function field.

Specifically, the extended function field may indicate configuration information of a first feature of an R2 device. The first feature is a feature supported by the R2 device but not supported by an R1 device.

For example, the first feature may be one or more of the following: a distributed resource unit, HARQ signaling, multi-AP signaling, and the like. This is not limited.

The distributed resource unit is a form of a resource unit in which most data subcarriers are discrete and discontinuous. Compared with a form of a resource unit in which most data subcarriers are continuous, the distributed resource unit can enhance frequency diversity, and alleviate limitation on transmit power in transmit power-related regulations.

For example, in the case in which the first feature includes a distributed resource unit, one bit may be used to indicate whether the configuration of distributed resource unit is adopted. If the configuration of distributed resource unit is adopted, one or more bits may be used to indicate a specific format of the distributed resource unit for a given resource unit. The given resource unit may be a resource unit whose RU allocation subfield in a legacy common field is given. For descriptions of a legacy user specific field, refer to the descriptions of the legacy user specific field in FIG. 1f. Details are not described again.

For example, in the case in which the first feature includes HARQ signaling, the HARQ signaling may include one or more of the following: a retransmission indication (retransmission indication), a process identifier (process ID), a HARQ type indication (for example, chase combining (chase combining, CC), incremental redundancy (incremental redundancy, IR)), a redundancy version, a transmitter address, a receiver address, and the like. This is not limited.

The extended function field may indicate the configuration information of the first feature of the R2 device. The R2 device that receives the PPDU may configure the first feature based on the configuration information of the first feature of the R2 device in the extended function field.

For example, the PPDU generated by the second device includes the extended function field, and the extended function field includes configuration information of HARQ signaling of R2 device 1 and configuration information of multi-AP signaling of R2 device 2. After receiving the PPDU, R2 device 1 may determine the configuration information of the HARQ signaling of R2 device 1 based on the extended function field, and configure a HARQ based on the configuration information. After receiving the PPDU, R2 device 2 may determine the configuration information of the multi-AP signaling of R2 device 2 based on the extended function field, and configure multiple APs based on the configuration information.

It should be noted that, if there is no first feature common to the R2 devices, or there is a first feature common to the R2 devices but configuration information of the first feature is different, the second device may carry the configuration information of the first feature of the R2 devices in the extended function field.

For example, there are the following R2 devices: R2 device 1, R2 device 2, and R2 device 3. When the second device sends the PPDU to the R2 devices, assuming that there is no first feature common to R2 device 1, R2 device 2, and R2 device 3, for example, assuming that a first feature of R2 device 1 is a distributed resource unit, a first feature of R2 device 2 is HARQ signaling, and a first feature of R2 device 3 is multi-AP signaling, the second device may include configuration information of the first feature of each of the R2 devices in the extended function field. In this way, after receiving the PPDU, R2 device 1 determines configuration information of the distributed resource unit based on the extended function field, and configures the distributed resource unit; after receiving the PPDU, R2 device 2 determines configuration information of the HARQ signaling based on the extended function field, and configures a HARQ; and after receiving the PPDU, R2 device 3 determines configuration information of the multi-AP signaling based on the extended function field, and configures multiple APs.

Based on FIG. 4, the PPDU further includes a legacy common field and a legacy user field.

The legacy common field may be for parsing the legacy user field. The legacy user field may indicate configuration information of a second feature. The second feature is a feature supported by both the R1 device and the R2 device.

Specifically, for descriptions of the legacy common field and the legacy user field, refer to the descriptions of the EHT-SIG field in FIG. 1f. Details are not described again.

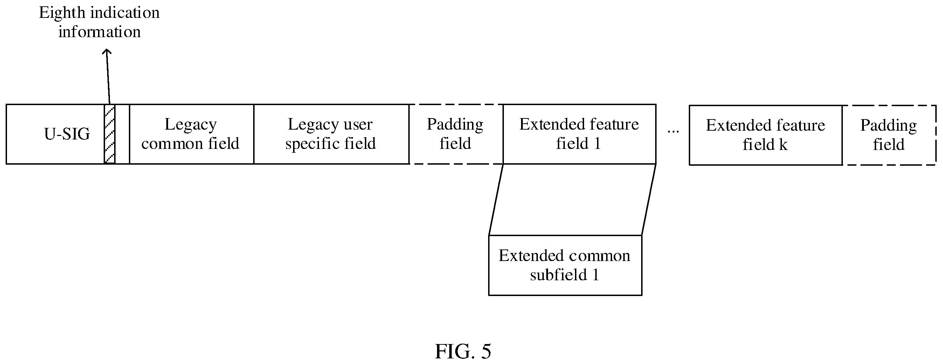

For example, the extended function field may be any one of the extended function fields shown in FIG. 5 to FIG. 8.

FIG. 5 is a schematic diagram of a PPDU frame structure according to an embodiment of this application. The PPDU may include the extended function field. As shown in FIG. 5, the extended feature field is an extended feature field, and the extended feature field may include an extended common subfield.

In a possible design, the extended common subfield includes first indication information and common feature indication information.

The first indication information indicates whether the first feature exists. The common feature indication information indicates common configuration information of the first feature.

For example, the extended common subfield includes extended common subfield 1, extended common subfield 2, and extended common subfield 3. It is assumed that extended common subfield 1 corresponds to first feature 1, extended common subfield 2 corresponds to first feature 2, and extended common subfield 3 corresponds to first feature 3. First indication information of extended common subfield 1 may be set to 0 to indicate that first feature 1 does not exist in extended common subfield 1, or first indication information of extended common subfield 1 may be set to 1 to indicate that first feature 1 exists in extended common subfield 1. First indication information of extended common subfield 2 is set to 0 to indicate that first feature 2 does not exist in extended common subfield 2, or first indication information of extended common subfield 2 is set to 1 to indicate that first feature 2 exists in extended common subfield 2. First indication information of extended common subfield 3 is set to 0 to indicate that first feature 3 does not exist in extended common subfield 3, or first indication information of extended common subfield 3 is set to 1 to indicate that first feature 3 exists in extended common subfield 1. If the first indication information in the extended common subfield indicates that the first feature exists, the R2 device may configure the first feature based on the common feature indication information.

In still another possible design, the extended common subfield includes second indication information and common feature indication information.

The second indication information indicates whether the R2 device configures the first feature. The common feature indication information indicates common configuration information of the first feature.

For example, the second indication information has one bit. The one bit may be set to 0 to indicate that the R2 device does not need to configure the first feature, or the one bit may be set to 1 to indicate that the R2 device configures the first feature.

When the second indication information indicates that the R2 device configures the first feature, the R2 device may configure the first feature based on the common configuration information of the first feature indicated by the common feature indication information.

In still another possible design, the extended common subfield includes first indication information, second indication information, and common feature indication information.

The first indication information may indicate whether the first feature exists, the second indication information may indicate whether the R2 device configures the first feature, and the common feature indication information indicates common configuration information of the first feature.

Specifically, when receiving the PPDU, the R2 device may determine, based on second indication information in each extended common subfield, whether to configure the first feature included in each extended common subfield. If the second indication information in the extended common subfield indicates that the R2 device configures the first feature, the R2 device may determine, based on the first indication information in the extended common subfield, whether the first feature exists in the extended common subfield. If the first feature exists, the R2 device configures the first feature based on the common configuration information of the first feature.

For example, for example, extended common subfield 1 corresponds to first feature 1, and extended common subfield 2 corresponds to first feature 2. The R2 device may determine, based on second indication information in extended common subfield 1, whether to configure first feature 1. If determining to configure first feature 1, the R2 device may determine, based on first indication information in extended common subfield 1, whether first feature 1 exists in extended common subfield 1. If first feature 1 exists, the R2 device configures first feature 1 based on common configuration information in extended common subfield 1. The R2 device may determine, based on second indication information in extended common subfield 2, whether to configure first feature 2. If determining to configure first feature 2, the R2 device determines, based on first indication information in extended common subfield 2, whether first feature 2 exists in extended common subfield 2. If first feature 2 exists, the R2 device configures first feature 2 based on common configuration information in extended common subfield 2.

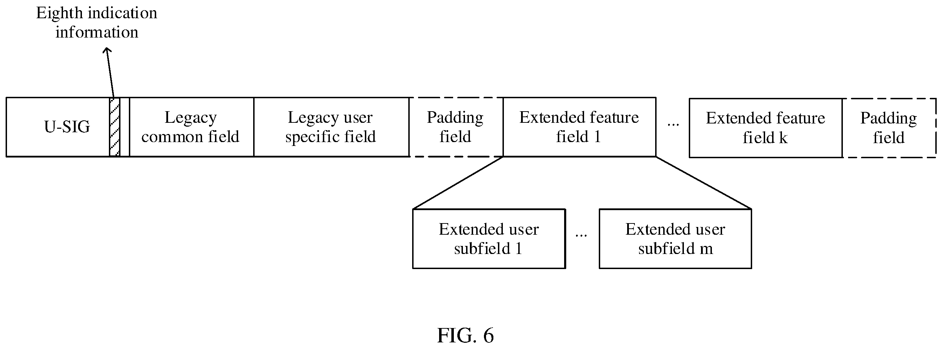

Different from the PPDU shown in FIG. 5, FIG. 6 is a schematic diagram of a PPDU frame structure according to an embodiment of this application. The PPDU may include an extended function field. As shown in FIG. 6, the extended function field is an extended feature field. The extended feature field may include an extended user subfield.

In a possible design, the extended user subfield includes identification information and user feature indication information.

The identification information indicates an R2 device. The user feature indication information indicates the configuration information of the first feature of the R2 device indicated by the identification information

For example, the identification information of the R2 device may be identification information indicating the R2 device, such as a station ID (STA ID). This is not limited.

For example, the PPDU includes extended user subfield 1 and extended user subfield 2. It is assumed that extended user subfield 1 includes identification information of R2 device 1 and configuration information of first feature 1, and extended user subfield 2 includes identification information of R2 device 2 and configuration information of first feature 2. After receiving the PPDU, R2 device 1 may determine, based on the identification information, that extended user subfield 1 is an extended user subfield of R2 device 1, and further configure first feature 1 based on the configuration information of first feature 1 in extended user subfield 1. After receiving the PPDU, R2 device 2 may determine, based on the identification information, that extended user subfield 2 is an extended user subfield of R2 device 2, and further configure first feature 2 based on the configuration information of first feature 2 in extended user subfield 2.

It should be noted that in this possible design, a length of the extended user subfield may be fixed. This allows the R2 device to determine a location of identification information in each extended user subfield based on the length of the extended user subfield, so as to identify the identification information.

In still another possible design, the extended user subfield includes user feature indication information.

The user feature indication information may indicate the configuration information of the first feature of the R2 device.

Optionally, a device corresponding to an extended user subfield is sequentially a device corresponding to a legacy user field, and the device is an R1 device or an R2 device. In other words, the extended user subfield includes an extended user subfield of the R1 device and an extended user subfield of the R2 device.

For example, the extended user subfield of the R1 device may be set as a pseudo user field. Information in the pseudo user field may be fixed or random, which is not limited. The R1 device does not need to parse the pseudo user field.

Based on the pseudo user field of the R1 device, the second device may set the extended user subfields based on a sequence of devices corresponding to the legacy user fields. In this way, the R2 device determines a location of the extended user subfield of the R2 device in the extended user subfields based on a location of a legacy user field of the R2 device in the legacy user fields.

For example, the legacy user fields sequentially include a legacy user field of the R1 device, a legacy user field of R2 device 1, and a legacy user field of R2 device 2. When the second device generates the PPDU, the extended user subfields may sequentially include an extended user subfield of the R1 device, an extended user subfield of R2 device 1, and an extended user subfield of R2 device 2. The extended user subfield of the R1 device is a pseudo user field. When receiving the PPDU, R2 device 1 may determine, on a basis of determining that the legacy user field of R2 device 1 is the 2^{nd} legacy user field, that the extended user subfield of R2 device 1 is the 2^{nd} extended user subfield. When receiving the PPDU, R2 device 2 may determine, on a basis that the legacy user field of R2 device 2 is the 3^{rd} legacy user field, that the extended user subfield of R2 device 2 is the 3^{rd} extended user subfield.

It should be noted that in this possible design, a length of the extended user subfield may be fixed. This allows the R2 device to determine a bit location of each extended user subfield based on the length of the extended user subfield.

In still another possible design, the extended user subfield includes location information and user feature indication information.

The user feature indication information may indicate the configuration information of the first feature of the R2 device.

In an example, the location information may indicate a location of a legacy user field corresponding to an extended user subfield in legacy user fields. The extended user subfield and the legacy user field corresponding to the extended user subfield correspond to a same R2 device.

For example, the PPDU includes eight legacy user fields. It is assumed that a legacy user field of R2 device 1 is the 7th legacy user field in the legacy user fields. The second device may set location information of an extended user subfield of R2 device 1 to 110. After receiving the PPDU, R2 device 1 may determine, by parsing the location information of each extended user subfield, a legacy user field corresponding to each extended user subfield; determine, based on identification information carried in the legacy user field, whether the legacy user field is the legacy user field of R2 device 1; and if the legacy user field is the legacy user field of R2 device 1, determine an extended user subfield corresponding to the legacy user field as the extended user subfield of R2 device 1.

In still another example, the location information may indicate a location of a resource unit corresponding to an extended user subfield. The extended user subfield and the resource unit corresponding to the extended user subfield correspond to a same R2 device.

Specifically, after receiving the PPDU, the R2 device may parse location information of each extended user subfield; determine a resource unit corresponding to each extended user subfield; determine, based on an R2 device corresponding to the resource unit, whether the resource unit is a resource unit of the R2 device; and if the resource unit is the resource unit of the R2 device, determine an extended user subfield corresponding to the resource unit as the extended user subfield of the R2 device.

In still another example, the location information may indicate frequency band and user locations.

For example, the location information has 8 bits. Some of the bits may indicate a corresponding frequency band, and the other bits indicate a specific user to be notified. For example, four bits may be used to notify a specific 20 MHz channel for a corresponding frequency band, and four bits are used to notify a specific user. By placing the location information in a header of each extended user subfield, each R2 device can find an extended user subfield corresponding to the R2 device.

Optionally, after receiving the PPDU, the R2 device determines the location of the extended user subfield of the R2 device in the extended user subfields using a bitmap indication method on a bandwidth basis.

For example, 8-bit (or 16-bit) bitmap indication is used for 320 MHz. 1 may indicate that a corresponding 20 MHz channel relates to a configuration of the R2 device, and 0 indicates that the corresponding 20 MHz channel does not relate to the configuration of the R2 device. Therefore, in a subsequent extended user subfield, information about a user served on 20 MHz corresponding to 0 may not be indicated, for example, no extended user subfield corresponding to the 20 MHz is present. Whether to use 8 bits or 16 bits is determined depending on whether information on different content channel is different or the same. The number of bits may be fixed or vary with bandwidth. This is not limited.

It should be noted that the foregoing definitions of 0 and 1 are interchangeable. In other words, 0 indicates that a corresponding 20 MHz channel relates to a configuration of the R2 device, and 1 indicates that the corresponding 20 MHz channel does not relate to the configuration of the R2 device. This is not limited.

Further, the R2 device may determine, in combination with the foregoing plurality of possible designs, the location of the extended user subfield of the R2 device in the extended user subfields using a bitmap indication method on a bandwidth basis. Details are not described.

Optionally, after receiving the PPDU, the R2 device determines the location of the extended user subfield of the R2 device in the extended user subfields using a bitmap method for one-by-one indication.

For example, because a maximum of nine users may be served on each 20 MHz channel, a bitmap may indicate whether each user corresponding to the foregoing RU allocation subfield is an R1 device or an R2 device. For example, a data packet bandwidth is 320 MHz, 16*9=144 bits may indicate whether each user is an R1 device or an R2 device. If different CCs with variable content are used, 8*9=72 bits may indicate whether each user is an R1 device or an R2 device. 1 may represent an R2 device, and 0 may represent an R1 device. An order of the extended user subfield of the R2 device in the extended user subfields may be learned of according to an order of 1s. Alternatively, 1 may indicate that the extended user subfields include the extended user subfield corresponding to the R2 device, and 0 may indicate that the extended user subfields do not include the extended user subfield corresponding to the R2 device. In addition, for 9 bits, only a valid location in the 9 bits is a valid indication. For example, if there are two users on an RU allocation subfield, only the first two bits are valid information.

It should be noted that in the foregoing possible design, if CCs are different, a number of required bits may be reduced in a design in which the bit number relates to setting of CCs. This is not limited. In addition, a location of a CC on which the extended user subfield of an R2 device is located may be consistent with a location of a CC on which the legacy user field of the same R2 device is located.

Further, in the foregoing plurality of possible designs, any two or more of the possible designs may be used in combination. This is not limited.

Based on the foregoing plurality of possible designs, the extended user subfield may further include third indication information.

The third indication information may indicate whether the R2 device configures the first feature based on the user feature indication information.

For example, the third indication information has one bit. The one bit may be set to 0 to indicate the R2 device not to configure the first feature based on the user feature indication information, or the one bit is set to 1 to indicate the R2 device to configure the first feature based on the user feature indication information.

In still another example, the third indication information has multiple bits. Assuming that in extended user subfield 1 of R2 device 1, the first feature includes first feature 1, first feature 2, and first feature 3, the third indication information, which may be 010, indicates R2 device 1 to configure second feature 2.

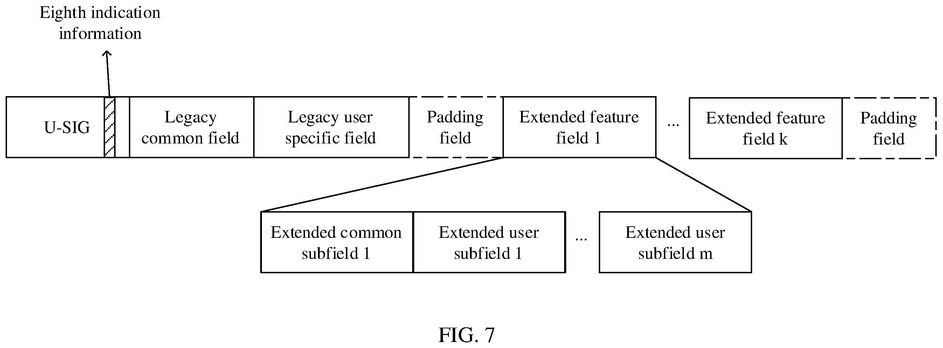

Based on the PPDUs shown in FIG. 5 and FIG. 6, FIG. 7 shows a PPDU frame structure according to an embodiment of this application. The PPDU may include an extended function field. As shown in FIG. 7, the extended function field is an extended feature field including the extended common subfield shown in FIG. 5 and the extended user subfield shown in FIG. 6.

For specific descriptions of the extended common subfield, refer to descriptions of the extended common subfield in FIG. 5. For descriptions of the extended user subfield, refer to descriptions of the extended user subfield in FIG. 6. Details are not described again.

Optionally, the extended common subfield further includes indication information indicating a length of the extended user subfield.

A length of the extended common subfield may be fixed or variable. The length of the extended user subfield may be fixed or variable. This is not limited.

For example, when the length of the extended user subfield is a fixed value, if the extended user subfield includes bits of first feature 1, assuming that the R2 device does not need to configure first feature 1, the bits of first feature 1 in the extended user subfield may still be reserved. In this case, the bits of first feature 1 may be set to null.

For example, when the length of the extended user subfield is a variable value, if the extended user subfield includes bits of first feature 1, assuming that the R2 device does not need to configure first feature 1, the extended user subfield may not need to include the bits of first feature 1.

Optionally, the extended common subfield further includes one or more of the following: fourth indication information and fifth indication information.

The fourth indication information indicates a type of the extended user subfield.

The fifth indication information indicates whether an extended user subfield of the R2 device is present.

For example, there are the following R2 devices in sequence: R2 device 1, R2 device 2, and R2 device 3. Assuming that the fifth indication information is 010, it may be determined that the extended user subfield of R2 device 2 is present.

Optionally, the extended common subfield further includes first common user information

The first common user information indicates common configuration information of the R2 device corresponding to the extended user subfield.

For example, the first common user information may include one or more of the following: a length of a next field, an MCS of the next field, a format of the next field, and the like. This is not limited.

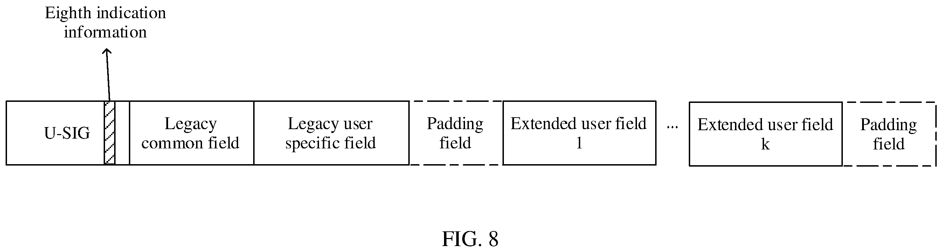

Different from the PPDU shown in FIG. 5 to FIG. 7, FIG. 8 is a schematic diagram of a PPDU frame structure according to an embodiment of this application. The PPDU may include an extended function field. As shown in FIG. 8, the extended feature field may be an extended user field.

In a possible design, the extended user field includes identification information and user feature indication information.

The identification information indicates an R2 device, and the user feature indication information indicates the configuration information of the first feature of the R2 device indicated by the identification information.

For example, the identification information of the R2 device may be identification information indicating the R2 device, such as a station ID (STA ID). This is not limited.

For example, the PPDU includes extended user field 1 and extended user field 2. It is assumed that extended user field 1 includes identification information of R2 device 1, configuration information of first feature 1, and configuration information of first feature 2. Extended user field 2 includes identification information of R2 device 2, configuration information of first feature 2, and configuration information of first feature 3. After receiving the PPDU, R2 device 1 may determine, based on the identification information, that extended user field 1 is an extended user field of R2 device 1, and then configure first feature 1 and first feature 2 based on the configuration information of first feature 1 and the configuration information of first feature 2 in extended user field 1. After receiving the PPDU, R2 device 2 may determine, based on the identification information, that extended user field 2 is an extended user field of R2 device 2, and then configure first feature 2 and first feature 3 based on the configuration information of first feature 2 and the configuration information of first feature 3 in extended user field 2.

It should be noted that in this possible design, a length of the extended user field may be fixed. This allows the R2 device to determine a location of identification information in each extended user field based on the length of the extended user field, so as to identify the identification information.

In another possible design, the extended user field includes user feature indication information.

The user feature indication information may indicate the configuration information of the first feature of the R2 device.

Optionally, a device corresponding to an extended user field is sequentially a device corresponding to a legacy user field, and the device is an R1 device or an R2 device. In other words, the extended user field includes an extended user field of the R1 device and an extended user field of the R2 device.

For example, the extended user field of the R1 device may be set as a pseudo user field. Information in the pseudo user field may be fixed or random, which is not limited. The R1 device does not need to parse the pseudo user field.

Based on the pseudo user field of the R1 device, the second device may set the extended user fields based on a sequence of devices corresponding to the legacy user fields. In this way, the R2 device determines a location of the extended user field of the R2 device in the extended user fields based on a location of a legacy user field of the R2 device in the legacy user fields.

For example, the legacy user fields sequentially include a legacy user field of the R1 device, a legacy user field of R2 device 1, and a legacy user field of R2 device 2. When the second device generates the PPDU, the extended user fields may sequentially include an extended user field of the R1 device, an extended user field of R2 device 1, and an extended user field of R2 device 2. The extended user field of the R1 device is a pseudo user field. When receiving the PPDU, R2 device 1 may determine, on a basis of determining that the legacy user field of R2 device 1 is the 2^{nd} legacy user field, that the extended user field of R2 device 1 is the 2^{nd} extended user field. When receiving the PPDU, R2 device 2 may determine, on a basis that the legacy user field of R2 device 2 is the 3^{rd} legacy user field, that the extended user field of R2 device 2 is the 3^{rd} extended user field.

It should be noted that in this possible design, a length of the extended user field may be fixed. This allows the R2 device to determine a bit location of each extended user field based on the length of the extended user field.

In another possible design, the extended user field includes location information and user feature indication information.

The user feature indication information may indicate the configuration information of the first feature of the R2 device.

In an example, the location information may indicate a location of a legacy user field corresponding to an extended user field in the legacy user fields. The extended user field and the legacy user field corresponding to the extended user field correspond to a same R2 device.

For example, the PPDU includes eight legacy user fields. It is assumed that a legacy user field of R2 device 1 is the 7th legacy user field in the legacy user field. The second device may set location information of an extended user field of R2 device 1 to 110. After receiving the PPDU, R2 device 1 may determine, by parsing location information of each extended user field, a legacy user field corresponding to each extended user field; determine, based on identification information carried in the legacy user field, whether the legacy user field is a legacy user field of R2 device 1; and if yes, determine an extended user field corresponding to the legacy user field as the extended user field of R2 device 1.

In still another example, the location information may indicate a location of a resource unit corresponding to an extended user field. The extended user field and the resource unit corresponding to the extended user field correspond to a same R2 device.

Specifically, after receiving the PPDU, the R2 device may determine, by parsing location information of each extended user field, a resource unit corresponding to each extended user field; determine, based on an R2 device corresponding to the resource unit, whether the resource unit is a resource unit of the R2 device; and if yes, determine an extended user field corresponding to the resource unit as the extended user field of the R2 device.

In still another example, the location information indicates frequency band and user locations.

For example, the location information has 8 bits. Some of the bits may indicate a corresponding frequency band, and the other bits indicate a specific user to be notified. For example, four bits may be used to notify a specific 20 MHz channel for a corresponding frequency band, and four bits are used to notify a specific user. By placing the location information in a header of each extended user field, each R2 device can find an extended user field corresponding to the R2 device.

Optionally, after receiving the PPDU, the R2 device determines the location of the extended user field of the R2 device in the extended user fields using a bitmap indication method on a bandwidth basis.

For example, 8-bit (or 16-bit) bitmap indication is used for 320 MHz. 1 may indicate that corresponding 20 MHz channel relates to a configuration of the R2 device, and 0 indicates that corresponding 20 MHz channel does not relate to the configuration of the R2 device. Therefore, in a subsequent extended user field, information about a user served on a 20 MHz channel corresponding to 0 may not be indicated, for example, no extended user field corresponding to the 20 MHz is present. Whether to use 8 bits or 16 bits is determined depending on whether information on different content channel is different or the same. The number of bits may be fixed or vary with bandwidth. This is not limited.

It should be noted that the foregoing definitions of 0 and 1 are interchangeable. In other words, 0 indicates that a corresponding 20 MHz channel relates to a configuration of the R2 device, and 1 indicates that the corresponding 20 MHz channel does not relate to the configuration of the R2 device. This is not limited.

Further, the R2 device may determine, in combination with the foregoing plurality of possible designs, the location of the extended user field of the R2 device in the extended user fields using a bitmap indication method on a bandwidth basis. Details are not described.

Optionally, after receiving the PPDU, the R2 device determines the location of the extended user field of the R2 device in the extended user fields using a bitmap method for one-by-one indication.

For example, because a maximum of nine users may be served on each 20 MHz channel, a bitmap may indicate whether each user corresponding to the foregoing RU allocation subfield is an R1 device or an R2 device. For example, a data packet bandwidth is 320 MHz, 16*9=144 bits may indicate whether each user is an R1 device or an R2 device. If different CCs with variable content are used, 8*9=72 bits may indicate whether each user is an R1 device or an R2 device. 1 may represent an R2 device, and 0 may represent an R1 device. An order of the extended user field of the R2 device in the extended user fields may be learned of according to an order of 1s. Alternatively, 1 may indicate that the extended user fields include the extended user field corresponding to the R2 device, and 0 may indicate that the extended user fields do not include the extended user field corresponding to the R2 device. In addition, for 9 bits, only a valid location in the 9 bits is a valid indication. For example, if there are two users on an RU allocation subfield, only the first two bits are valid information.

It should be noted that in the foregoing possible design, if CCs are different, a number of required bits may be reduced in a design in which the bit number relates to setting of CCs. This is not limited. In addition, a location of a CC on which the extended user field of an R2 device is located is consistent with a location of a CC on which the legacy user field of the same R2 device is located.

Further, in the foregoing plurality of possible designs, any two or more of the possible designs may be used in combination. This is not limited.

Based on the foregoing plurality of possible designs, the extended user field may further include third indication information.

The third indication information may indicate whether the R2 device configures the first feature based on the user feature indication information.

For example, the third indication information has one bit. The one bit may be set to 0 to indicate the R2 device not to configure the first feature based on the user feature indication information, or the one bit is set to 1 to indicate the R2 device to configure the first feature based on the user feature indication information.

In still another example, the third indication information has multiple bits. Assuming that in extended user field 1 of R2 device 1, the first feature includes first feature 1, first feature 2, and first feature 3, the third indication information, which may be 010, indicates R2 device 1 to configure second feature 2.

It should be noted that in this embodiment of this application, only the extended function field is added on the basis of the legacy common field and the legacy user field, to indicate the first feature supported by the R2 device but not supported by the R1 device. It may be understood that the PPDU may further include other fields shown in FIG. 1f. Details are not described again.

Step 302: The second device sends the PPDU to a first device. Accordingly, the first device receives the PPDU.

In a possible design, when there are an R1 device and an R2 device as first devices, the extended function field is located in a padding area in the EHT-SIG field of the PPDU.

Specifically, the second device sets the extended function field in the padding area in the EHT-SIG field of the PPDU; and adjusts, based on a length of the padding area, an EHT-SIG symbol number field that is in the U-SIG field and that indicates the length of the EHT-SIG field. Therefore, the R1 device can determine the length of the padding area in the legacy user specific field based on the U-SIG field and the legacy common field when parsing the received PPDU. For related descriptions of the legacy user specific field, refer to the descriptions of the legacy user specific field in FIG. 1f. Details are not described again.

The R1 device does not need to parse the padding area in the EHT-SIG field, that is, the R1 device does not parse the extended function field in the padding area. This avoids impact of the extended function field on the R1 device, and ensures that the R1 device operates normally.

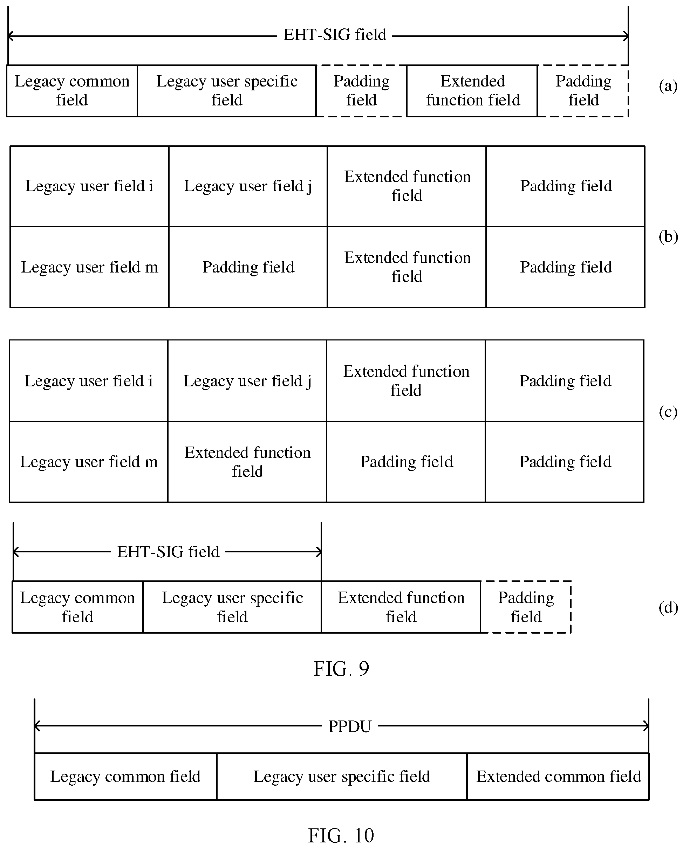

For example, as shown in (a) in FIG. 9, an OFDM symbol on which a start location of the extended function field is located and an OFDM symbol on which an end location of the last legacy user field of the PPDU is located may be separated by N OFDM symbols. The N OFDM symbols may be a padding field.

Optionally, the extended function field starts from an OFDM symbol following an OFDM symbol on which an end location of a last legacy user field of the PPDU is located.

Further, as shown in (b) in FIG. 9, following the extended function field, a padding field is further included. A length of the padding field may be set randomly, which is not limited.

Optionally, in the case of a data packet bandwidth greater than or equal to 80 MHz, the second device sends, to the first device through at least two content channels, the PPDU including the extended function field.

For example, the extended function field may be located after a last legacy user field in an EHT-SIG field with a longer legacy user specific field in the at least two content channels.

The EHT-SIG field includes a legacy user specific field, and the legacy user specific field includes a legacy user field.

For example, as shown in (b) in FIG. 9, the second device sends, to the first device through two content channels, the PPDU carrying the extended function field. The extended function field may be located after the last legacy user field in the EHT-SIG field with the longer legacy user specific field in the two content channels.

In still another example, the extended function field may be located after a last legacy user field in an EHT-SIG field of each of the at least two content channels.

For example, as shown in (c) in FIG. 9, the second device sends, to the first device through two content channels, the PPDU carrying the extended function field. The extended function field may be located after the last legacy user field in the EHT-SIG field of each of the two content channels.

In another possible design, when there is only the R2 device as the first device, the extended function field is located after the EHT-SIG field.

For example, as shown in (d) in FIG. 9, the extended function field may start from an OFDM symbol following the EHT-SIG field.

Step 303: The first device parses the PPDU.

When the first device is the R1 device, the R1 device may determine, from the legacy common field and the legacy user field in the received PPDU, the configuration information of the second feature of the R1 device, and configure the second feature based on the configuration information of the second feature of the R1 device.

When the first device is the R2 device, the R2 device may determine, from the legacy common field and the legacy user field in the received PPDU, the configuration information of the second feature of the R2 device, and configure the second feature based on the configuration information of the second feature of the R2 device.

It should be noted that, for specific descriptions of configuring the second feature based on the legacy common field and the legacy user field by the R1 device and the R2 device, refer to related descriptions in the 802.11be standard. Details are not described.

The R2 device may further determine, based on the received PPDU, the configuration information of the second feature of the R2 device from the extended function field of the PPDU, and configure the second feature based on the configuration information of the second feature of the R2 device.

It should be noted that, in descriptions of the first feature and the second feature in this embodiment of this application, the first feature may also be understood as an extended feature of the second feature.

For example, the second feature is a configuration of a spatial stream. It is assumed that x bits in the legacy user field of the R2 device indicate a configuration of a spatial stream, and y bits may be added to the extended function field of the R2 device to indicate a configuration of an extended spatial stream, that is, the first feature is essentially the configuration of the extended spatial stream. In this case, the configuration of the spatial stream of the R2 device includes the x-bit configuration of the spatial stream and the y-bit configuration of the spatial stream.

Based on the method shown in FIG. 3, the second device adds the extended function field to the PPDU. This allows the R2 device to determine the configuration information of the first feature of the R2 device based on the extended function field. The R2 device with numerous features and functions can be well supported via the introduction of the extended function field.

Based on the flowchart shown in FIG. 3, different from the PPDU including the extended function field shown in FIG. 4 to FIG. 9, FIG. 10 is a schematic diagram of a PPDU frame structure according to an embodiment of this application. The PPDU may include an extended common field.

Specifically, refer to the flowchart of the communication method shown in FIG. 3. The method may include the following steps.

Step 301: A second device generates a PPDU.

As shown in FIG. 10, the PPDU may include the extended common field.

Specifically, the extended common field indicates common configuration information of a first feature. The first feature is a feature supported by an R2 device but not supported by an R1 device.

For example, the first feature may be one or more of the following: a distributed resource unit, HARQ signaling, multi-AP signaling, and the like. This is not limited.

The distributed resource unit is a form of a resource unit in which most data subcarriers are discrete and discontinuous. Compared with a form of a resource unit in which most data subcarriers are continuous, the distributed resource unit can enhance frequency diversity, and alleviate limitation on transmit power in transmit power-related regulations.

For example, in the case in which the first feature includes a distributed resource unit, one bit may be used to indicate whether the configuration of distributed resource unit is adopted. If the configuration of distributed resource unit is adopted, one or more bits may be used to indicate a specific format of the distributed resource unit for a given resource unit. The given resource unit may be a resource unit whose RU allocation subfield in a legacy common field is given. For descriptions of a legacy user specific field, refer to the descriptions of the legacy user specific field in FIG. 1f. Details are not described again.

For example, in the case in which the first feature includes HARQ signaling, the HARQ signaling may include one or more of the following: a retransmission indication (retransmission indication), a process identifier (process ID), a HARQ type indication (for example, chase combining (chase combining, CC), incremental redundancy (incremental redundancy, IR)), a redundancy version, a transmitter address, a receiver address, and the like. This is not limited.

The extended common field may indicate the common configuration information of the first feature, and the R2 device that receives the PPDU may configure the first feature based on the common configuration information of the first feature.

For example, the PPDU generated by the second device includes the extended common field, and the first feature includes the HARQ signaling and the multi-AP signaling. The extended common field may include common configuration information of the HARQ signaling and common configuration information of the multi-AP signaling. When R2 device 1 and R2 device 2 receive the PPDU, both R2 device 1 and R2 device 2 may configure a HARQ based on the common configuration information of the HARQ signaling, and configure multiple APs based on the common configuration information of the multi-AP signaling.

It should be noted that, when the second device sends the PPDU to the R2 devices, if there is a first feature common to the R2 devices, and configuration information of the first feature is the same, the second device may carry common configuration information of the first feature common to the R2 devices in the extended common field. This reduces signaling overheads and reduces processing complexity of the second device and the R2 devices.

For example, there are the following R2 devices: R2 device 1, R2 device 2, and R2 device 3. When the second device sends the PPDU to the R2 devices, assuming that there is HARQ signaling common to R2 device 1, R2 device 2, and R2 device 3, and configuration information of the HARQ signaling of the R2 devices is the same, the second device may add the configuration information of the HARQ signaling to the extended common field, so that each of the R2 devices configures a HARQ based on the common configuration information of the HARQ signaling in the extended common field after receiving the PPDU.

In a possible design, the extended common field includes first indication information and common feature indication information.

The first indication information indicates whether the first feature exists. The common feature indication information indicates the common configuration information of the first feature.

For example, the first feature includes first feature 1, first feature 2, and first feature 3. Assuming that the first indication information has 3 bits, the R2 device may determine, based on the 3 bits, whether each of the first features exists. For example, if the first indication information is 011, the R2 device may determine, based on the first indication information, that first feature 2 exists in the extended common field, but first feature 1 and first feature 3 do not exist; then determine common configuration information of first feature 2 based on the common feature indication information, and configure first feature 2 based on the common configuration information of first feature 2.

In still another possible design, the extended common field includes second indication information and common feature indication information.

The second indication information indicates whether the R2 device configures the first feature. The common feature indication information indicates the common configuration information of the first feature.

For example, the second indication information has one bit. The one bit may be set to 0 to indicate that the R2 device does not need to configure the first feature, or the one bit may be set to 1 to indicate that the R2 device configures the first feature.

When the second indication information indicates that the R2 device configures the first feature, the R2 device may configure the first feature based on the common configuration information of the first feature indicated by the common feature indication information.

In still another possible design, the extended common field includes first indication information, second indication information, and common feature indication information.

The first indication information indicates whether the first feature exists, the second indication information indicates whether the R2 device configures the first feature, and the common feature indication information indicates the common configuration information of the first feature.

Specifically, when the R2 device receives the PPDU, the R2 device may determine, based on the second indication information, whether to configure the first feature. If the second indication information indicates that the R2 device configures the first feature, the R2 device may determine, based on the first indication information, the first feature existing in the extended common field indicated by the first indication information, and configure the first feature based on the common configuration information of the first feature in the common feature indication information.

For example, the first feature includes first feature 1, first feature 2, and first feature 3, the first indication information is 011, and the second indication information is 1. The R2 device determines, based on the second indication information, that the R2 device needs to configure the first feature; determines, based on the first indication information, that the first feature existing in the extended common field includes first feature 2 and first feature 3; determines common configuration information of first feature 2 and common configuration information of first feature 3 based on the common feature indication information, and therefore configures first feature 2 and first feature 3.

Based on FIG. 10, the PPDU further includes a legacy common field and a legacy user field.

The legacy common field may be for parsing the legacy user field. The legacy user field may indicate configuration information of a second feature. The second feature is a feature supported by both the R1 device and the R2 device.

Specifically, for descriptions of the legacy common field and the legacy user field, refer to the descriptions of the EHT-SIG field in FIG. 1f. Details are not described again.

It should be noted that, in this embodiment of this application, only the extended common field is added on the basis of the legacy common field and the legacy user field, to indicate the first feature supported by the R2 device but not supported by the R1 device. It may be understood that the PPDU may further include other fields shown in FIG. 1f. Details are not described again.

Step 302: The second device sends the PPDU to a first device. Accordingly, the first device receives the PPDU.

In a possible design, when there are an R1 device and an R2 device as first devices, the extended common field is located in a padding area in the EHT-SIG field of the PPDU.

Specifically, the second device sets the extended common field in the padding area in the EHT-SIG field of the PPDU; and adjusts, based on a length of the padding area, an EHT-SIG symbol number field that is in a U-SIG field and that indicates a length of the EHT-SIG field. Therefore, the R1 device can determine the length of the padding area in the legacy user specific field based on the U-SIG field and the legacy common field when parsing the received PPDU. For related descriptions of the legacy user specific field, refer to the descriptions of the legacy user specific field in FIG. 1f. Details are not described again.

The R1 device does not need to parse the padding area in the EHT-SIG field, that is, the R1 device does not parse the extended common field in the padding area. Therefore, this avoids impact of the extended common field on the R1 device, and ensures that the R1 device operates normally.

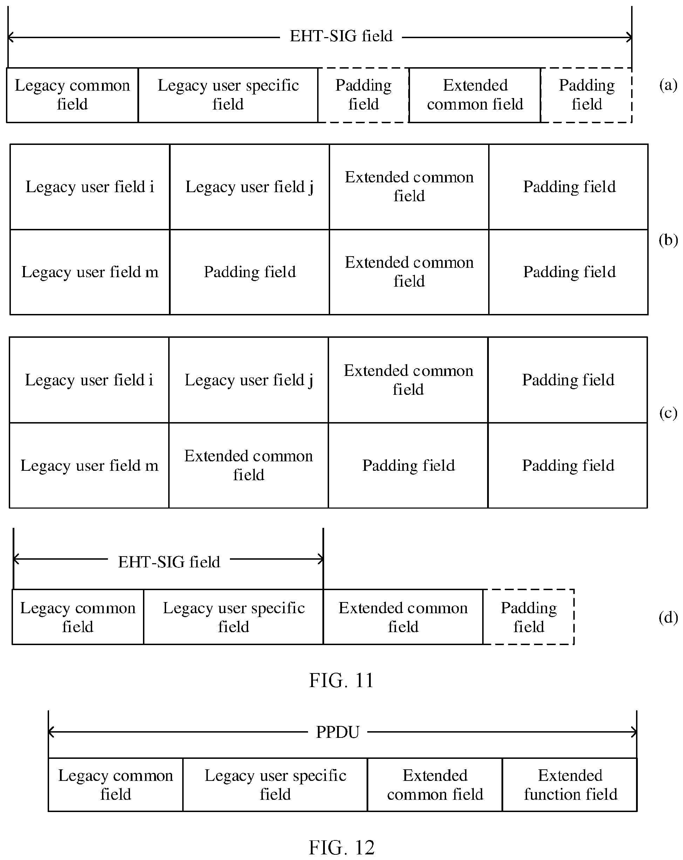

For example, as shown in (a) in FIG. 11, an OFDM symbol on which a start location of the extended common field is located and an OFDM symbol on which an end location of a last legacy user field of the PPDU is located may be separated by N OFDM symbols. The N OFDM symbols may be a padding field.

Optionally, the extended common field starts from an OFDM symbol following an OFDM symbol on which an end location of a last legacy user field of the PPDU is located.

Further, as shown in (a) in FIG. 11, following the extended common field, a padding field is further included. A length of the padding field may be set randomly, which is not limited.

Optionally, in the case of a data packet bandwidth greater than or equal to 80 MHz, the second device sends, to the first device through at least two content channels, the PPDU carrying the extended common field.

For example, the extended common field may be located after a last legacy user field in an EHT-SIG field with a longer legacy user specific field in the at least two content channels.

The EHT-SIG field includes the legacy user specific field, and the legacy user specific field includes a legacy user field.

For example, as shown in (b) in FIG. 11, the second device sends, to the first device through two content channels, the PPDU carrying the extended common field and/or an extended function field. The extended common field may be located after the last legacy user field in the EHT-SIG field with the longer legacy user specific field in the two content channels.

In still another example, the extended common field may be located after a last legacy user field in the EHT-SIG field of each of the at least two content channels.

For example, as shown in (c) in FIG. 11, the second device sends, to the first device through two content channels, the PPDU carrying the extended common field. The extended common field may be located after the last legacy user field in the EHT-SIG field of each of the two content channels.

In still another possible design, when there is only the R2 device as the first device, the extended common field is located after the EHT-SIG field.

For example, as shown in (d) in FIG. 11, the extended common field may start from an OFDM symbol following the EHT-SIG field.

Step 303: The first device parses the PPDU.

When the first device is the R1 device, the R1 device may determine, based on the received PPDU, configuration information of a second feature of the R1 device from the legacy common field and the legacy user field of the PPDU; and configure the second feature based on the configuration information of the second feature of the R1 device.

When the first device is the R2 device, the R2 device may determine, from the legacy common field and the legacy user field in the received PPDU, configuration information of a second feature of the R2 device, and configure the second feature based on the configuration information of the second feature of the R2 device.

It should be noted that, for specific descriptions of configuring the second feature based on the legacy common field and the legacy user field by the R1 device and the R2 device, refer to related descriptions in the 802.11be standard. Details are not described.

The R2 device may further determine, based on the received PPDU, the configuration information of the second feature of the R2 device from the extended common field of the PPDU; and configure the second feature based on the configuration information of the second feature of the R2 device.

It should be noted that, in descriptions of the first feature and the second feature in this embodiment of this application, the first feature may also be understood as an extended feature of the second feature.

For example, the second feature is a configuration of a spatial stream. It is assumed that x bits in a legacy user field of the R2 device indicate a configuration of a spatial stream, and y bits may be added to the extended common field to indicate a configuration of an extended spatial stream, that is, the first feature is essentially the configuration of the extended spatial stream. In this case, the configuration of the spatial stream of the R2 device includes the x-bit configuration of the spatial stream and the y-bit configuration of the spatial stream.

Based on the method shown in FIG. 3, the second device adds the extended common field to the PPDU. This allows the R2 device to determine the common configuration information of the first feature based on the extended common field. The R2 device with numerous features and functions can be well supported via the introduction of the extended common field.

Based on the flowchart shown in FIG. 3, with reference to the extended function fields shown in FIG. 4 to FIG. 8 and the extended common field shown in FIG. 10, FIG. 12 is a schematic diagram of a PPDU frame structure according to an embodiment of this application. The PPDU may include the extended common field shown in FIG. 10 and any one of the extended function fields shown in FIG. 4 to FIG. 8.

Specifically, refer to the flowchart of the communication method shown in FIG. 3. The method may include the following steps.

Step 301: A second device generates a PPDU.

As shown in FIG. 12, the PPDU may include the extended common field and the extended function field.

Specifically, the extended common field may indicate common configuration information of a first feature. The extended function field may indicate configuration information of the first feature of an R2 device. The first feature may be a feature supported by the R2 device but not supported by an R1 device.

For descriptions of the extended common field, refer to the descriptions of the extended common field in FIG. 10. For descriptions of the extended function field, refer to the descriptions of the extended function fields in FIG. 4 to FIG. 8. Details are not described again.

Optionally, the extended common field is for parsing the extended function field.

For example, the extended common field may include indication information indicating a length of the extended function field. After receiving the PPDU, the R2 device may determine the length of the extended function field based on the indication information that is in the extended common field and that indicates the length of the extended function field.

For example, the extended common field may include indication information indicating a total length of the extended common field and the extended function field. After receiving the PPDU, the R2 device may determine the total length of the extended common field and the extended function field based on the indication information that is in the extended common field and that indicates the total length of the extended common field and the extended function field.

Optionally, the extended common field includes second common user information.

The second common user information may indicate the common configuration information of the R2 device corresponding to the extended function field.

For example, the second common user information may be one or more of the following: a length of a next field, an MCS of the next field, a format of the next field, and the like. This is not limited.

It should be noted that, when the second device sends the PPDU to the R2 devices, if there is a first feature common to the R2 devices, and configuration information of the first feature is the same or partially the same, the second device may carry common configuration information of the first feature common to the R2 devices in the extended common field. This reduces signaling overheads and reduces processing complexity of the second device and the R2 devices. If there is no first feature common to the R2 devices, or there is a first feature common to the R2 devices but configuration information of the first feature is different, the second device may carry the configuration information of the first feature of the R2 devices in the extended function field, that is, the extended common field does not include the common configuration information of the first feature.

For example, there are the following R2 devices: R2 device 1, R2 device 2, and R2 device 3. When the second device sends the PPDU to the R2 devices, assuming that there is HARQ signaling common to R2 device 1, R2 device 2, and R2 device 3, and configuration information of the HARQ signaling of the R2 devices is partially the same, the second device may add a same part of the configuration information of the HARQ signaling of the R2 devices to the extended common field, the different parts are respectively carried in extended function fields of the R2 devices. In this way, after receiving the PPDU, each of the R2 devices configures a part of a HARQ based on the common configuration information of the HARQ signaling in the extended common field, determines remaining configuration information of the HARQ signaling of the R2 device based on the extended function field, and configures the remaining part of the HARQ based on the remaining configuration information.

For another example, there are the following R2 devices: R2 device 1, R2 device 2, and R2 device 3. When the second device sends the PPDU to the R2 devices, assuming that assumed that there is no first feature common to R2 device 1, R2 device 2, and R2 device 3, for example, assuming that a first feature of R2 device 1 is a distributed resource unit, a first feature of R2 device 2 is HARQ signaling, and a first feature of R2 device 3 is multi-AP signaling, the second device may carry configuration information of the first feature of the R2 devices in the extended function field. In this way, R2 device 1 determines configuration information of the distributed resource unit based on the extended function field after receiving the PPDU, and configures the distributed resource unit. R2 device 2 determines configuration information of the HARQ signaling based on the extended function field after receiving the PPDU, and configures a HARQ. R2 device 3 determines configuration information of the multi-AP signaling based on the extended function field after receiving the PPDU, and configures multiple APs.

Based on FIG. 12, the PPDU further includes a legacy common field and a legacy user field.

The legacy common field may be for parsing the legacy user field. The legacy user field may indicate configuration information of a second feature. The second feature is a feature supported by both the R1 device and the R2 device.

Specifically, for descriptions of the legacy common field and the legacy user field, refer to the descriptions of the EHT-SIG field in FIG. 1f. Details are not described again.

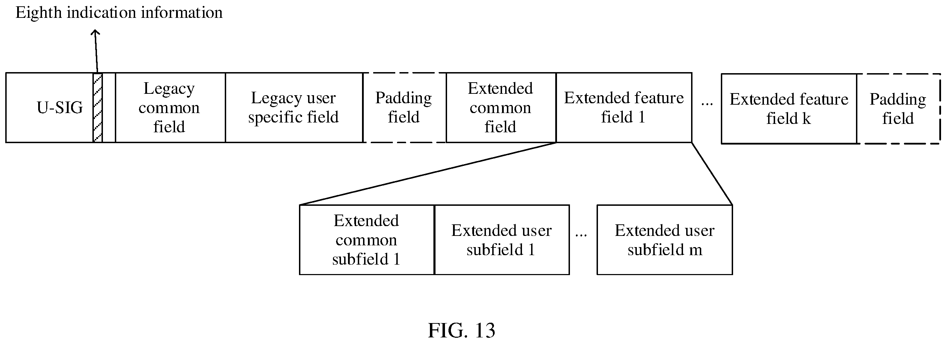

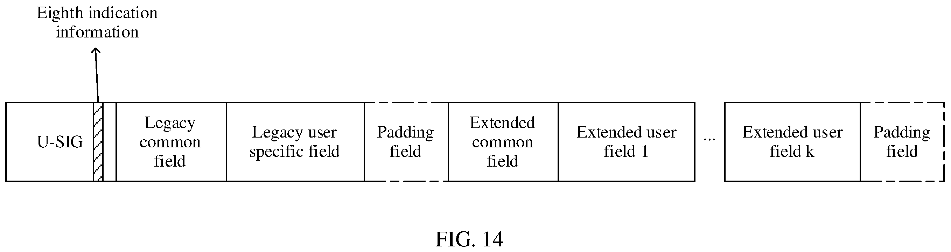

For example, the PPDU shown in FIG. 12 may be a PPDU shown in FIG. 13. As shown in FIG. 13, the PPDU may include the extended common field shown in FIG. 10 and any extended feature field shown in FIG. 5 to FIG. 7. The PPDU shown in FIG. 12 may alternatively be a PPDU shown in FIG. 14. As shown in FIG. 14, the PPDU may include the extended common field shown in FIG. 10 and the extended user field shown in FIG. 8.

FIG. 13 is a schematic diagram of a PPDU frame structure according to this embodiment of this application. The PPDU may include the extended common field shown in FIG. 10 and any extended feature field shown in FIG. 5 to FIG. 7.

For descriptions of the extended common field and the extended feature field, refer to the foregoing descriptions of the extended common field and the extended feature field. Details are not described again.

Optionally, the extended common field further includes indication information indicating a length of an extended user field.

A length of the extended common field may be fixed or variable. A length of the extended feature field may be fixed or variable. This is not limited.

Optionally, the extended common field further includes seventh indication information

The seventh indication information may indicate whether an extended feature field of the R2 device is present.

For example, there are the following R2 devices in sequence: R2 device 1, R2 device 2, and R2 device 3. Assuming that the seventh indication information is 010, it may be determined that the extended user field of R2 device 2 is present.

FIG. 14 is a schematic diagram of a PPDU frame structure according to this embodiment of this application. The PPDU may include the extended common field shown in FIG. 10 and the extended user field shown in FIG. 8.

Optionally, the extended common field further includes indication information indicating a length of the extended user field.

A length of the extended common field may be fixed or variable. The length of the extended user field may be fixed or variable. This is not limited.

For example, when the length of the extended user field is a fixed value, and the extended user field includes bits of first feature 1 and bits of first feature 2, assuming that the R2 device does not need to configure first feature 2, the bits of first feature 2 in the extended user field may still be reserved, and may be set to null in this case.

For example, when the length of the extended user field is a variable value, and the extended user field includes bits of first feature 1 and bits of first feature 2, assuming that the R2 device does not need to configure first feature 2, the extended user field may include the bits of first feature 1, and the bits of first feature 2 are not reserved.

Optionally, the extended common field further includes seventh indication information.

The seventh indication information may indicate whether the extended user field of the R2 device is present.

For example, there are the following R2 devices in sequence: R2 device 1, R2 device 2, and R2 device 3. Assuming that the seventh indication information is 010, it may be determined that the extended user field of R2 device 2 is present.

Optionally, based on the extended common field shown in FIG. 12 to FIG. 14, the extended common field further includes second common user information.

The second common user information indicates common configuration information of the R2 device corresponding to the extended function field.

Optionally, based on the extended common field shown in FIG. 12 to FIG. 14, the extended common field further includes sixth indication information.

The sixth indication information may indicate a type of the extended function field. The type of the extended function field may be the extended function field shown in FIG. 5, FIG. 6, FIG. 7, or in FIG. 8. This is not limited.

It should be noted that, in this embodiment of this application, only the extended common field and the extended function field are added on the basis of the legacy common field and the legacy user field, to indicate the first feature supported by the R2 device but not supported by the R1 device. It may be understood that the PPDU may further include other fields shown in FIG. 1f. Details are not described again.

Step 302: The second device sends the PPDU to a first device. Accordingly, the first device receives the PPDU.

In a possible design, when there are an R1 device and an R2 device as first devices, the extended common field and the extended function field are located in a padding area in an EHT-SIG field of the PPDU.

Specifically, the second device sets the extended common field and the extended function field in the padding area in the EHT-SIG field of the PPDU, and adjusts, based on a length of the padding area, an EHT-SIG symbol number field that is in a U-SIG field and that indicates a length of the EHT-SIG field. Therefore, the R1 device can determine the length of the padding area in a legacy user specific field based on the U-SIG field and the legacy common field when parsing the received PPDU. For related descriptions of the legacy user specific field, refer to the descriptions of the legacy user specific field in FIG. 1f. Details are not described again.

The R1 device does not need to parse the padding area in the EHT-SIG field, that is, the R1 device does not parse the extended common field and the extended function field in the padding area. This avoids impact of the extended common field and the extended function field on the R1 device, and ensures that the R1 device operates normally.

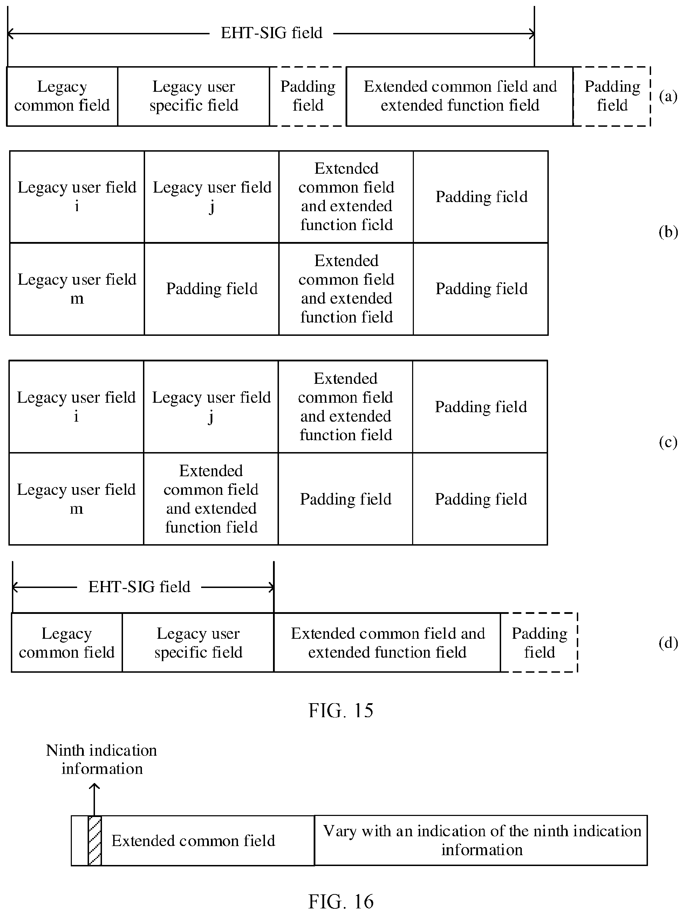

For example, as shown in (a) in FIG. 15, an OFDM symbol on which a start location of the extended common field and the extended function field is located and an OFDM symbol on which an end location of a last legacy user field of the PPDU is located may be separated by N OFDM symbols. The N OFDM symbols may be a padding field.

Optionally, the extended common field and the extended function field start from an OFDM symbol following an OFDM symbol on which an end location of a last legacy user field of the PPDU is located.

Further, as shown in (a) in FIG. 15, following the extended common field and the extended function field, a padding field is further included. A length of the padding field may be set randomly, which is not limited.

Optionally, in the case of a data packet bandwidth greater than or equal to 80 MHz, the second device sends, to the first device through at least two content channels, the PPDU including the extended common field and the extended function field.

For example, the extended common field and the extended function field may be located after a last legacy user field in an EHT-SIG field with a longer legacy user specific field in the at least two content channels.

The EHT-SIG field includes the legacy user specific field, and the legacy user specific field includes a legacy user field.

For example, as shown in (b) in FIG. 15, the second device sends, to the first device through two content channels, the PPDU carrying the field and the extended function field. The extended common field and the extended common function field may be located after the last legacy user field in the EHT-SIG field with the longer legacy user specific field in the two content channels.

In still another example, the extended common field and the extended function field may be located after a last legacy user field in the EHT-SIG field of each of the at least two content channels.

For example, as shown in (c) in FIG. 15, the second device sends, to the first device through two content channels, the PPDU carrying the extended common field and the extended function field. The extended common field and the extended function field may be located after the last legacy user field in the EHT-SIG field of each of the two content channels.

In still another possible design, when there is only the R2 device as the first device, the extended common field and the extended function field are located after the EHT-SIG field.

For example, as shown in (d) in FIG. 15, the extended common field and the extended function field may start from an OFDM symbol following the EHT-SIG field.

Step 303: The first device parses the PPDU.

When the first device is the R1 device, the R1 device may determine, from the legacy common field and the legacy user field in the received PPDU, configuration information of a second feature of the R1 device, and configure the second feature based on the configuration information of the second feature of the R1 device.

When the first device is the R2 device, the R2 device may determine, from the legacy common field and the legacy user field in the received PPDU, configuration information of a second feature of the R2 device, and configure the second feature based on the configuration information of the second feature of the R2 device.

It should be noted that, for specific descriptions of configuring the second feature based on the legacy common field and the legacy user field by the R1 device and the R2 device, refer to related descriptions in the 802.11be standard. Details are not described.

The R2 device may further determine, based on the received PPDU, the configuration information of the second feature of the R2 device from the extended common field and the extended function field of the PPDU, and configure the second feature based on the configuration information of the second feature of the R2 device.

It should be noted that, in descriptions of the first feature and the second feature in this embodiment of this application, the first feature may also be understood as an extended feature of the second feature.

For example, the second feature is a configuration of a spatial stream. It is assumed that x bits in a legacy user field of the R2 device indicate a configuration of a spatial stream, and y bits may be added to an extended function field of the R2 device to indicate a configuration of an extended spatial stream, that is, the first feature is essentially the configuration of the extended spatial stream. In this case, the configuration of the spatial stream of the R2 device includes the x-bit configuration of the spatial stream and the y-bit configuration of the spatial stream.

Based on the method shown in FIG. 3, the second device adds the extended common field and the extended function field to the PPDU. This allows the R2 device to determine the common configuration information of the first feature based on the extended common field, and determine the configuration information of the first feature of the R2 device based on the extended function field. The R2 device with numerous features and functions can be well supported via the introduction of the extended common field and the extended function field.

Based on the PPDUs shown in FIG. 3 to FIG. 15, optionally, the padding field in the EHT-SIG field of the PPDU further includes eighth indication information.

When the PPDU is the PPDU shown in any one of FIG. 4 to FIG. 9, the eighth indication information indicates whether the PPDU includes the extended function field. When the PPDU is the PPDU shown in any one of FIG. 10 to FIG. 11, the eighth indication information indicates whether the PPDU includes the extended common field. When the PPDU is the PPDU shown in any one of FIG. 12 to FIG. 14, the eighth indication information indicates whether the PPDU includes the extended common field and the extended function field.

For example, the PPDU is the PPDU shown in any one of FIG. 4 to FIG. 9, and the eighth indication information has one bit. The one bit may be set to 0, to indicate that the PPDU does not include the extended function field. The R2 device may not need to parse a subsequent field based on the eighth indication information. Alternatively, the one bit may be set to 1 to indicate that the PPDU includes the extended function field. The R2 device may parse the subsequent extended function field based on the eighth indication information, to configure the first feature indicated by the extended function field.

For example, the eighth indication information may alternatively be a preset ID. When the PPDU includes the preset ID, it indicates that the PPDU includes the extended function field, or includes the extended common field, or includes the extended common field and the extended function field.

Interchangeably, the eighth indication information is located in a reserved bit of the U-SIG field, a reserved bit of the legacy common field, or the legacy user specific field. This is not limited.

The reserved bit may include a validate field and a disregard field.

Optionally, the U-SIG field of the PPDU further includes ninth indication information.

The ninth indication information may indicate a type of the extended common field and/or the extended function field.

Specifically, the type of the extended common field and/or the extended function field may be the frame structure shown in any one of FIG. 4 to FIG. 14.

Interchangeably, the ninth indication information is located in a reserved bit in the legacy common field.

Interchangeably, as shown in FIG. 16, when the PPDU includes the extended common field, the ninth indication information is located in the extended common field. This is not limited.

Based on the PPDUs described in FIG. 4 to FIG. 16, a CRC field and a tail field may be added after the extended common field or the extended common subfield, and the CRC field and the tail field may be added after every x extended user fields or every x extended user subfields, where x ≥ 1. Alternatively, the CRC field and the tail field may be added after a specific number of fixed bits. This is not limited.

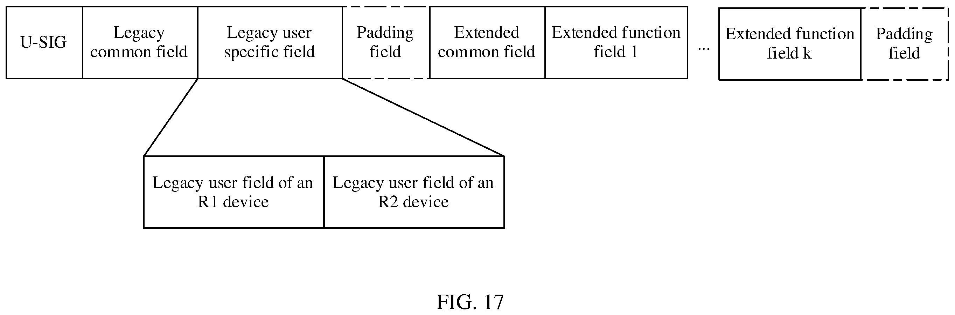

Further, as shown in FIG. 17, the meaning of the legacy user field of the R2 device may be modified.

For example, when the legacy user field of the PPDU includes the legacy user field of the R2 device, the legacy user field of the R2 device may include location information, and a location of the extended function field of the R2 device in the extended function field is determined based on the location information.

For example, the legacy user field of the PPDU includes the following fields: a legacy user field of the R1 device, a legacy user field of R2 device 1, and a legacy user field of R2 device 2. Assuming that location information in the legacy user field of R2 device 1 is 5, and location information in the legacy user field of R2 device 1 is 9, R2 device 1 may determine, based on the location information, that an extended function field of R2 device 1 is located in the fifth bit of the extended function field, R2 device 2 may determine, based on the location information, that an extended function field of R2 device 2 is located in the ninth bit in the extended function field.

Optionally, the legacy user field of the R2 device further includes tenth indication information.

The tenth indication information indicates whether the extended function field includes the extended function field of the R2 device.

For example, the tenth indication information has one bit. The one bit may be set to 0 to indicate that the extended function field does not include the extended function field of the R2 device. The R2 device may not need to parse a subsequent extended user field based on the tenth indication information. Alternatively, the one bit may be set to 1 to indicate that the extended function field includes the extended function field of the R2 device, and the R2 device may parse the subsequent extended function field based on the tenth indication information to determine the extended user field of the R2 device.

It should be noted that, in the PPDU described in FIG. 17, a length of the legacy user field of the R2 device may be the same as a length of the legacy user field of the R1 device.

Based on the PPDUs shown in FIG. 4 to FIG. 17, the extended common field and/or the extended function field in embodiments of this application may be used in various areas having a padding field function, such as end of frame padding (end of frame padding, EOF padding), pre-forward error correction code padding (pre-forward error correction, Pre-FEC padding), backward error correction code padding (post-forward error correction, Post-FEC padding), packet extension padding (packet extension field), and signal extension (signal extension). This may alternatively be used to indicate new configuration or content information provided for the R2 device. This is not limited.

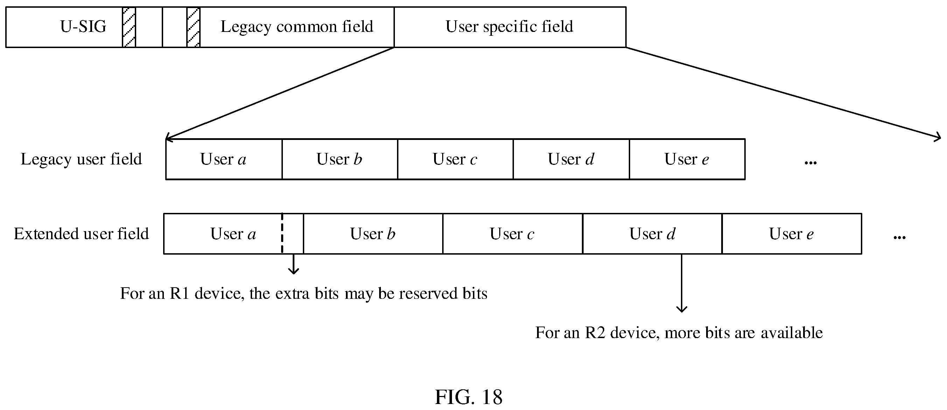

Different from the PPDUs shown in FIG. 4 to FIG. 17 in which no modification is made to the length of the legacy user field, a PPDU frame structure shown in FIG. 18 is further provided in an embodiment of this application.

FIG. 18 is a schematic diagram of the PPDU frame structure according to this embodiment of this application. The PPDU may include a user specific field, and the user specific field may include an extended user field.

Specifically, the user specific field may support an extended user field and a legacy user field, where a bit number of the extended user field may be equal to a sum of a bit number of the legacy user field and a first bit number. The first bit number may indicate configuration information of a first feature of an R2 device.

The R2 device may configure the first feature based on the configuration information of the first feature of the R2 device, where the configuration information is indicated by the first bit number.

It should be noted that, for an R1 device, a field corresponding to the first bit number in the extended user field may be a padding field. The R1 device does not need to parse the padding field. This avoids impact of the first bit number on the R1 device.

For example, for the R1 device, content of the extended user field may be {{content of the R1 device}, padding field}. The padding field may be set to 0 or 1, which is not limited. When reading the extended user field, the R1 device only needs to analyze content of the R1 device, and does not need to parse the padding field, meaning that the first bit number may be in the form of a disregard field.

Optionally, the PPDU includes a legacy common field, where the legacy common field includes eleventh indication information.

The eleventh indication information may indicate that a user field in the user specific field is an extended user field, or the eleventh indication information may indicate that a user field in the user specific field is a legacy user field.

Interchangeably, the eleventh indication information is located in a U-SIG field. This is not limited.

For example, the eleventh indication information has one bit. The one bit may be set to 0 to indicate that the user field in the user specific field is a legacy user field, or the one bit may be set to 1 to indicate that the user field in the user specific field is an extended user field.

It should be noted that a length of the legacy user field may be 22 bits, and a length of the extended user field may be 32 bits. This is not limited.

The foregoing describes the communication method in embodiments of this application. The following describes communication apparatuses in embodiments of this application. The communication apparatuses in embodiments of this application include a communication apparatus used in a transmitting end and a communication apparatus used in a receiving end It should be understood that the communication apparatus used in the transmitting end is the second device in the foregoing method, and has functions of the second device in the foregoing method. The communication apparatus used in the receiving end is the first device in the foregoing method, and has functions of the first device in the foregoing method.

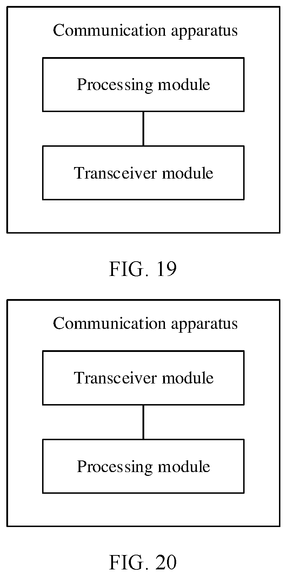

As shown in FIG. 19, a communication apparatus used in a transmitting end includes a processing module and a transceiver module.

The processing module is configured to generate a physical layer protocol data unit PPDU, where the PPDU includes an extended function field indicating configuration information of a first feature of an R2 device. The first feature is a feature supported by the R2 device but not supported by an R1 device. The transceiver module is configured to send the PPDU.

Alternatively, the processing module is configured to generate a physical layer protocol data unit PPDU. The PPDU includes an extended common field indicating common configuration information of a first feature. The first feature is a feature supported by an R2 device but not supported by an R1 device. The transceiver module is configured to send the PPDU.

Alternatively, the processing module is configured to generate a physical layer protocol data unit PPDU. The PPDU includes an extended common field indicating common configuration information of a first feature and an extended function field indicating configuration information of the first feature of an R2 device. The first feature is a feature supported by the R2 device but not supported by an R1 device. The transceiver module is configured to send the PPDU.

Alternatively, the processing module is configured to generate a PPDU including a user specific field. The user specific field includes at least one extended user field. The user specific field supports the extended user field and a legacy user field. A bit number of the extended user field is equal to a sum of a bit number of the legacy user field and a first bit number. The first bit number indicates configuration information of a first feature of an R2 device. The first feature is a feature supported by the R2 device but not supported by an R1 device. The transceiver module is configured to send the PPDU.

The communication apparatus used in the transmitting end provided in this embodiment of this application is the second device in the foregoing method, and has functions of the second device in the foregoing method. For details, refer to the foregoing method. Details are not described herein again.

As shown in FIG. 20, a communication apparatus used in a receiving end includes a transceiver module and a processing module.

The transceiver module is configured to: receive a physical layer protocol data unit PPDU including an extended function field indicating configuration information of a first feature of an R2 device, where the first feature is a feature supported by the R2 device but not supported by an R1 device; and the first device parses the PPDU. When the first device is the R2 device, the processing module is configured to determine the configuration information of the first feature of the R2 device by parsing the extended function field.

Alternatively, the transceiver module is configured to: receive a physical layer protocol data unit PPDU including an extended common field indicating common configuration information of a first feature, where the first feature is a feature supported by an R2 device but not supported by an R1 device; and the first device parses the PPDU. When the first device is the R2 device, the processing module is configured to determine the common configuration information of the first feature by parsing the extended common field.

Alternatively, the transceiver module is configured to receive a physical layer protocol data unit PPDU including an extended common field indicating common configuration information of a first feature and an extended function field indicating configuration information of the first feature of an R2 device, where the first feature is a feature supported by the R2 device but not supported by the R1 device; and the first device parses the PPDU. When the first device is the R2 device, the processing module is configured to determine the common configuration information of the first feature by parsing the extended common field, and determine the configuration information of the first feature of the R2 device by parsing the extended function field.

Alternatively, the transceiver module is configured to: receive a PPDU including a user specific field, where the user specific field includes at least one extended user field supporting an extended user field and a legacy user field, a bit number of the extended user field is equal to a sum of a bit number of the legacy user field and a first bit number, the first bit number indicates configuration information of a first feature of an R2 device, and the first feature is a feature supported by the R2 device but not supported by an R1 device; and the first device parses the PPDU. When the first device is the R2 device, the processing unit is configured to determine the configuration information of the first feature of the R2 device by parsing the first bit number.

The communication apparatus used in the receiving end provided in this embodiment of this application is the first device in the foregoing method, and has functions of the first device in the foregoing method. For details, refer to the foregoing method. Details are not described herein again.

The foregoing describes the communication apparatus used in the transmitting end and the communication apparatus used in the receiving end in embodiments of this application. The following describes possible product forms of the communication apparatus used in the transmitting end and the communication apparatus used in the receiving end. It should be understood that any form of product having the features of the communication apparatus used in the transmitting end in FIG. 19 and any form of product having the features of the communication apparatus used in the receiving end in FIG. 20 fall within the protection scope of this application. It should be further understood that the following description is merely an example, and a product form of the communication apparatus used in the transmitting end and a product form of the communication apparatus used in the receiving end in embodiments of this application are not limited thereto.

In a possible product form, the communication apparatus used in the transmitting end and the communication apparatus used in the receiving end in embodiments of this application may be implemented using general bus architectures.

The communication apparatus used in the transmitting end includes a processor and a transceiver that is internally connected to and communicates with the processor. The processor is configured to generate a PPDU, and the transceiver is configured to send the PPDU. Optionally, the communication apparatus used in the transmitting end may further include a memory for storing instructions executed by the processor.

The communication apparatus used in the receiving end includes a processor and a transceiver that is internally connected to and communicates with the processor. The transceiver is configured to receive a PPDU, and the processor is configured to parse the PPDU. Optionally, the communication apparatus used in the receiving end may further include a memory for storing instructions executed by the processor.

In a possible product form, the communication apparatus used in the transmitting end and the communication apparatus used in the receiving end in embodiments of this application may be implemented using general-purpose processors.

The general-purpose processor for implementing the communication apparatus used in the transmitting end includes a processing circuit and an input/output interface that is internally connected to and communicates with the processing circuit. The processing circuit is configured to generate a PPDU, and the input/output interface is configured to send the PPDU. Optionally, the general-purpose processor may further include a storage medium for storing instructions executed by the processing circuit.

The general-purpose processor for implementing the communication apparatus used in the receiving end includes a processing circuit and an input/output interface that is internally connected to and communicates with the processing circuit. The input/output interface is configured to receive a PPDU, and the processing circuit is configured to parse the PPDU. Optionally, the general-purpose processor may further include a storage medium for storing instructions executed by the processing circuit.

In a possible product form, the communication apparatus used in the transmitting end and the communication apparatus used in the receiving end in embodiments of this application may alternatively be implemented by using one or more of the following components: an FPGA (field programmable gate array), a PLD (programmable logic device), a controller, a state machine, a gate logic, a discrete hardware component, or any other suitable circuits, or any combination of circuits that can perform various functions described in this application.

It should be understood that the communication apparatus used in the transmitting end and the communication apparatus used in the receiving end in the foregoing product forms respectively have functions of the transmitting end and functions of the receiving end in the foregoing method embodiments. Details are not described herein again.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the legacy art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium capable of storing program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of the claims.

## Claims

1. A communication method, comprising:
generating (301) a physical layer protocol data unit, PPDU, wherein the PPDU comprises an extended function field indicating configuration information of a first feature of an R2 device, and the first feature is a feature supported by the R2 device but not supported by an R1 device; and
sending (302) the PPDU,
**characterized in that**
the PPDU further comprises a legacy common field and a legacy user field, wherein the legacy common field is for parsing the legacy user field, the legacy user field indicates configuration information of a second feature, and the second feature is a feature supported by both the R1 device and the R2 device;
the legacy user field is configured to be determined by parsing the legacy common field; and
the configuration information of the second feature is configured to be determined by parsing the legacy user field.

2. A communication method, comprising:
receiving (302) a physical layer protocol data unit, PPDU, wherein the PPDU comprises an extended function field indicating configuration information of a first feature of an R2 device, and the first feature is a feature supported by the R2 device but not supported by an R1 device; and
parsing (303) the PPDU, wherein the configuration information of the first feature of the R2 device is determined by parsing the extended function field,
**characterized in that**
the PPDU further comprises a legacy common field and a legacy user field, wherein the legacy common field is for parsing the legacy user field, the legacy user field indicates configuration information of a second feature, and the second feature is a feature supported by both the R1 device and the R2 device;
the legacy user field is determined by parsing the legacy common field; and
the configuration information of the second feature is determined by parsing the legacy user field.

3. The method according to claim 1 or 2, wherein
the extended function field is an extended feature field comprising an extended common subfield, the extended common subfield comprises first indication information and common feature indication information, the first indication information indicates whether the first feature exists, and the common feature indication information indicates common configuration information of the first feature;
whether the first feature exists is determined by parsing the first indication information; and
the common configuration information of the first feature is determined by parsing the common feature indication information.

4. The method according to claim 1 or 2, wherein
the extended function field is an extended feature field comprising an extended common subfield, the extended common subfield comprises second indication information and common feature indication information, the second indication information indicates whether the R2 device configures the first feature, and the common feature indication information indicates common configuration information of the first feature;
whether the R2 device configures the first feature is determined by parsing the second indication information; and
the common configuration information of the first feature is determined by parsing the common feature indication information.

5. The method according to claim 1 or 2, wherein
the extended function field is an extended feature field comprising an extended common subfield, the extended common subfield comprises first indication information, second indication information, and common feature indication information, the first indication information indicates whether the first feature exists, the second indication information indicates whether the R2 device configures the first feature, and the common feature indication information indicates common configuration information of the first feature;
whether the first feature exists is determined by parsing the first indication information;
whether the R2 device configures the first feature is determined by parsing the second indication information; and
the common configuration information of the first feature is determined by parsing the common feature indication information.

6. The method according to claim 1 or 2, wherein
the extended function field is an extended feature field comprising an extended user subfield;
the extended user subfield comprises identification information and user feature indication information, the identification information indicates an R2 device, and the user feature indication information indicates the configuration information of the first feature of the R2 device indicated by the identification information;
the R2 device is determined by parsing the identification information; and
the configuration information of the first feature of the R2 device indicated by the identification information is determined by parsing the user feature indication information.

7. The method according to claim 1 or 2, wherein
the extended function field is an extended feature field comprising an extended user subfield;
a device corresponding to the extended user subfield is sequentially the same as a device corresponding to the legacy user field, the device is an R1 device or an R2 device, and the extended user subfield comprises an extended user subfield of the R1 device and an extended user subfield of the R2 device;
the extended user subfield of the R2 device comprises user feature indication information indicating the configuration information of the first feature of the R2 device; and
the configuration information of the first feature of the R2 device is determined by parsing the user feature indication information.

8. The method according to claim 7, wherein that a device corresponding to the extended user subfield is sequentially the same as a device corresponding to the legacy user field comprises:
a device corresponding to at least one extended user subfield is sequentially the same as a device corresponding to at least one legacy user field.

9. The method according to claim 1 or 2, wherein
the extended function field is an extended feature field comprising an extended user subfield;
the extended user subfield comprises location information and user feature indication information; and
the user feature indication information indicates the configuration information of the first feature of the R2 device, the location information indicates a location of a legacy user field corresponding to the extended user subfield in the legacy user field, the extended user subfield and the legacy user field corresponding to the extended user subfield correspond to a same R2 device, the configuration information of the first feature of the R2 device is determined by parsing the user feature indication information, and the location of the legacy user field corresponding to the extended user subfield in the legacy user field is determined by parsing the location information; or
the user feature indication information indicates the configuration information of the first feature of the R2 device, the location information indicates a location of a resource unit corresponding to the extended user subfield, the extended user subfield and the resource unit corresponding to the extended user subfield correspond to a same R2 device, the configuration information of the first feature of the R2 device is determined by parsing the user feature indication information, and the location of the resource unit corresponding to the extended user subfield is determined by parsing the location information.

10. The method according to any one of claims 6 to 9, wherein
the extended user subfield further comprises third indication information indicating whether the R2 device configures the first feature based on the user feature indication information; and
whether the R2 device configures the first feature based on the user feature indication information is determined by parsing the third indication information.

11. The method according to any one of claims 6 to 10, wherein
the extended function field is an extended feature field comprising an extended common subfield and the extended user subfield, wherein the extended common subfield is for parsing the extended user subfield; and
the extended user subfield is determined by parsing the extended common subfield.

12. The method according to claim 11, wherein
the extended common subfield comprises one or more of the following: common feature indication information, first indication information, second indication information, fourth indication information, and fifth indication information;
the common feature indication information indicates common configuration information of the first feature, the first indication information indicates whether the first feature exists, the second indication information indicates whether the R2 device configures the first feature, the fourth indication information indicates a type of the extended user subfield, and the fifth indication information indicates whether the extended user subfield of the R2 device is present; and
the common configuration information of the first feature is determined by parsing the common feature indication information, whether the first feature exists is determined by parsing the first indication information, whether the R2 device configures the first feature is determined by parsing the second indication information, the type of the extended user subfield is determined by parsing the fourth indication information, and whether the extended user subfield of the R2 device is present is determined by parsing the fifth indication information.

13. The method according to any one of claims 3 to 12, wherein
the extended common subfield further comprises first common user information, wherein the first common user information indicates the common configuration information of the R2 device corresponding to the extended user subfield; and
the common configuration information of the R2 device corresponding to the extended user subfield is determined by parsing the first common user information.

14. A communication apparatus, configured to perform the communication method according to any one of claims 1 to 13.

15. A computer-readable storage medium, configured to store a computer program comprising instructions, or a computer program product comprising instructions, wherein the instructions are for performing the communication method according to any one of claims 1 to 13.

## Patentansprüche

1. Kommunikationsverfahren, umfassend:
Erzeugen (301) einer Protokolldateneinheit einer physikalischen Schicht, PPDU, wobei die PPDU ein erweitertes Funktionsfeld umfasst, das Konfigurationsinformationen eines ersten Merkmals eines R2-Geräts angibt, und das erste Merkmal ein Merkmal ist,
das durch das R2-Gerät unterstützt wird, jedoch nicht durch ein R1-Gerät unterstützt wird; und
Senden (302) der PPDU,
**dadurch gekennzeichnet, dass**
die PPDU ferner ein gemeinsames Legacy-Feld und ein Legacy-Benutzerfeld umfasst, wobei das gemeinsame Legacy-Feld zum Parsen des Legacy-Benutzerfelds dient, das Legacy-Benutzerfeld Konfigurationsinformationen eines zweiten Merkmals angibt und das zweite Merkmal ein Merkmal ist, das durch sowohl das R1-Gerät als auch das R2-Gerät unterstützt wird;
das Legacy-Benutzerfeld dazu konfiguriert ist, durch Parsen des gemeinsamen Legacy-Felds bestimmt zu werden; und
die Konfigurationsinformationen des zweiten Merkmals dazu konfiguriert sind, durch Parsen des Legacy-Benutzerfelds bestimmt zu werden.

2. Kommunikationsverfahren, umfassend:
Empfangen (302) einer Protokolldateneinheit einer physikalischen Schicht, PPDU, wobei die PPDU ein erweitertes Funktionsfeld umfasst, das Konfigurationsinformationen eines ersten Merkmals eines R2-Geräts angibt, und das erste Merkmal ein Merkmal ist, das durch das R2-Gerät unterstützt wird, jedoch nicht durch ein R1-Gerät unterstützt wird; und
Parsen (303) der PPDU, wobei die Konfigurationsinformationen des ersten Merkmals des R2-Geräts durch Parsen des erweiterten Funktionsfelds bestimmt werden,
**dadurch gekennzeichnet, dass**
die PPDU ferner ein gemeinsames Legacy-Feld und ein Legacy-Benutzerfeld umfasst, wobei das gemeinsame Legacy-Feld zum Parsen des Legacy-Benutzerfelds dient, das Legacy-Benutzerfeld Konfigurationsinformationen eines zweiten Merkmals angibt und das zweite Merkmal ein Merkmal ist, das durch sowohl das R1-Gerät als auch das R2-Gerät unterstützt wird;
das Legacy-Benutzerfeld durch Parsen des Legacy-Gemeinschaftsfelds bestimmt wird; und
die Konfigurationsinformationen des zweiten Merkmals durch Parsen des Legacy-Benutzerfelds bestimmt werden.

3. Verfahren nach Anspruch 1 oder 2, wobei
das erweiterte Funktionsfeld ein erweitertes Merkmalsfeld ist, das ein erweitertes gemeinsames Unterfeld umfasst, das erweiterte gemeinsame Unterfeld erste Angabeinformationen und Angabeinformationen gemeinsamer Merkmale umfasst, die ersten Angabeinformationen angeben, ob das erste Merkmal existiert, und die Angabeinformationen gemeinsamer Merkmale gemeinsame Konfigurationsinformationen des ersten Merkmals angeben;
ob das erste Merkmal existiert, durch Parsen der ersten Angabeinformationen bestimmt wird; und
die gemeinsamen Konfigurationsinformationen des ersten Merkmals durch Parsen der Angabeinformationen gemeinsamer Merkmale bestimmt werden.

4. Verfahren nach Anspruch 1 oder 2, wobei
das erweiterte Funktionsfeld ein erweitertes Merkmalsfeld ist, das ein erweitertes gemeinsames Unterfeld umfasst, das erweiterte gemeinsame Unterfeld zweite Angabeinformationen und Angabeinformationen gemeinsamer Merkmale umfasst, die zweiten Angabeinformationen angeben, ob das R2-Gerät das erste Merkmal konfiguriert, und die Angabeinformationen gemeinsamer Merkmale gemeinsame Konfigurationsinformationen des ersten Merkmals angeben;
ob das R2-Gerät das erste Merkmal konfiguriert, durch Parsen der zweiten Angabeinformationen bestimmt wird; und
die gemeinsamen Konfigurationsinformationen des ersten Merkmals durch Parsen der Angabeinformationen gemeinsamer Merkmale bestimmt werden.

5. Verfahren nach Anspruch 1 oder 2, wobei
das erweiterte Funktionsfeld ein erweitertes Merkmalsfeld ist, das ein erweitertes gemeinsames Unterfeld umfasst, das erweiterte gemeinsame Unterfeld erste Angabeinformationen, zweite Angabeinformationen und Angabeinformationen gemeinsamer Merkmale umfasst, die ersten Angabeinformationen angeben, ob das erste Merkmal existiert, die zweiten Angabeinformationen angeben, ob das R2-Gerät das erste Merkmal konfiguriert, und die Angabeinformationen gemeinsamer Merkmale gemeinsame Konfigurationsinformationen des ersten Merkmals angeben;
ob das erste Merkmal existiert, durch Parsen der ersten Angabeinformationen bestimmt wird;
ob das R2-Gerät das erste Merkmal konfiguriert, durch Parsen der zweiten Angabeinformationen bestimmt wird; und
die gemeinsamen Konfigurationsinformationen des ersten Merkmals durch Parsen der Angabeinformationen gemeinsamer Merkmale bestimmt werden.

6. Verfahren nach Anspruch 1 oder 2, wobei
das erweiterte Funktionsfeld ein erweitertes Merkmalsfeld ist, das ein erweitertes Benutzerunterfeld umfasst;
das erweiterte Benutzerunterfeld Kennungsinformationen und Benutzermerkmalsangabeinformationen umfasst, die Kennungsinformationen ein R2-Gerät angeben und die Benutzermerkmalsangabeinformationen die Konfigurationsinformationen des ersten Merkmals des R2-Geräts angeben, das durch die Kennungsinformationen angegeben wird; das R2-Gerät durch Parsen der Kennungsinformationen bestimmt wird; und
die Konfigurationsinformationen des ersten Merkmals des R2-Geräts, das durch die Kennungsinformationen angegeben wird, durch Parsen der Benutzermerkmalsangabeinformationen bestimmt werden.

7. Verfahren nach Anspruch 1 oder 2, wobei
das erweiterte Funktionsfeld ein erweitertes Merkmalsfeld ist, das ein erweitertes Benutzerunterfeld umfasst;
ein Gerät, das dem erweiterten Benutzerunterfeld entspricht, sequentiell das gleiche wie ein Gerät ist, das dem Legacy-Benutzerfeld entspricht, das Gerät ein R1-Gerät oder ein R2-Gerät ist und das erweiterte Benutzerunterfeld ein erweitertes Benutzerunterfeld des R1-Geräts und ein erweitertes Benutzerunterfeld des R2-Geräts umfasst;
das erweiterte Benutzerunterfeld des R2-Geräts Benutzermerkmalsangabeinformationen umfasst, welche die Konfigurationsinformationen des ersten Merkmals des R2-Geräts angeben; und
die Konfigurationsinformationen des ersten Merkmals des R2-Geräts durch Parsen der Benutzermerkmalsangabeinformationen bestimmt werden.

8. Verfahren nach Anspruch 7, wobei, dass ein Gerät, das dem erweiterten Benutzerunterfeld entspricht, sequentiell das gleiche wie ein Gerät ist, das dem Legacy-Benutzerfeld entspricht, Folgendes umfasst:
ein Gerät, das mindestens einem erweiterten Benutzerunterfeld entspricht, ist sequenziell das gleiche wie ein Gerät, das mindestens einem Legacy-Benutzerfeld entspricht.

9. Verfahren nach Anspruch 1 oder 2, wobei
das erweiterte Funktionsfeld ein erweitertes Merkmalsfeld ist, das ein erweitertes Benutzerunterfeld umfasst;
das erweiterte Benutzerunterfeld Standortinformationen und Benutzermerkmalsangabeinformationen umfasst; und
die Benutzermerkmalsangabeinformationen die Konfigurationsinformationen des ersten Merkmals des R2-Geräts angeben, die Standortinformationen einen Standort eines Legacy-Benutzerfelds angeben, das dem erweiterten Benutzerunterfeld in dem Legacy-Benutzerfeld entspricht, das erweiterte Benutzerunterfeld und das Legacy-Benutzerfeld, das dem erweiterten Benutzerunterfeld entspricht, einem gleichen R2-Gerät entsprechen, die Konfigurationsinformationen des ersten Merkmals des R2-Geräts durch Parsen der Benutzermerkmalsangabeinformationen bestimmt werden und der Standort des Legacy-Benutzerfelds, das dem erweiterten Benutzerunterfeld in dem Legacy-Benutzerfeld entspricht, durch Parsen der Standortinformationen bestimmt wird; oder
die Benutzermerkmalsangabeinformationen die Konfigurationsinformationen des ersten Merkmals des R2-Geräts angeben, die Standortinformationen einen Standort einer Ressourceneinheit angeben, die dem erweiterten Benutzerunterfeld entspricht, das erweiterte Benutzerunterfeld und die Ressourceneinheit, die dem erweiterten Benutzerunterfeld entspricht, einem gleichen R2-Gerät entsprechen, die Konfigurationsinformationen des ersten Merkmals des R2-Geräts durch Parsen der Benutzermerkmalsangabeinformationen bestimmt werden und der Standort der Ressourceneinheit, die dem erweiterten Benutzerunterfeld entspricht, durch Parsen der Standortinformationen bestimmt wird.

10. Verfahren nach einem der Ansprüche 6 bis 9, wobei das erweiterte Benutzerunterfeld ferner dritte Angabeinformationen umfasst, die angeben, ob das R2-Gerät das erste Merkmal basierend auf den Benutzermerkmalsangabeinformationen konfiguriert; und
ob das R2-Gerät das erste Merkmal basierend auf den Benutzermerkmalsangabeinformationen konfiguriert, durch Parsen der dritten Angabeinformationen bestimmt wird.

11. Verfahren nach einem der Ansprüche 6 bis 10, wobei das erweiterte Funktionsfeld ein erweitertes Merkmalsfeld ist, das ein erweitertes gemeinsames Unterfeld und das erweiterte Benutzerunterfeld umfasst, wobei das erweiterte gemeinsame Unterfeld zum Parsen des erweiterten Benutzerunterfelds dient; und
das erweiterte Benutzerunterfeld durch Parsen des erweiterten gemeinsamen Unterfelds bestimmt wird.

12. Verfahren nach Anspruch 11, wobei
das erweiterte gemeinsame Unterfeld eines oder mehrere von Folgendem umfasst: gemeinsamen Merkmalsangabeinformationen, ersten Angabeinformationen, zweiten Angabeinformationen, vierten Angabeinformationen und fünften Angabeinformationen; die gemeinsamen Merkmalsangabeinformationen gemeinsame Konfigurationsinformationen des ersten Merkmals angeben, die ersten Angabeinformationen angeben, ob das erste Merkmal existiert, die zweiten Angabeinformationen angeben, ob das R2-Gerät das erste Merkmal konfiguriert, die vierten Angabeinformationen eine Art des erweiterten Benutzerunterfelds angeben und die fünften Angabeinformationen angeben, ob das erweiterte Benutzerunterfeld des R2-Geräts zugegen ist; und die gemeinsamen Konfigurationsinformationen des ersten Merkmals durch Parsen der Angabeinformationen gemeinsamer Merkmale bestimmt werden, ob das erste Merkmal existiert, durch Parsen der ersten Angabeinformationen bestimmt wird, ob das R2-Gerät das erste Merkmal konfiguriert, durch Parsen der zweiten Angabeinformationen bestimmt wird, die Art des erweiterten Benutzerunterfelds durch Parsen der vierten Angabeinformationen bestimmt wird und, ob das erweiterte Benutzerunterfeld des R2-Geräts zugegen ist, durch Parsen der fünften Angabeinformationen bestimmt wird.

13. Verfahren nach einem der Ansprüche 3 bis 12, wobei das erweiterte gemeinsame Unterfeld ferner erste gemeinsame Benutzerinformationen umfasst, wobei die ersten gemeinsamen Benutzerinformationen die gemeinsamen Konfigurationsinformationen des R2-Geräts angeben, das dem erweiterten Benutzerunterfeld entspricht; und
die gemeinsamen Konfigurationsinformationen des R2-Geräts, das dem erweiterten Benutzerunterfeld entspricht, durch Parsen der ersten gemeinsamen Benutzerinformationen bestimmt werden.

14. Kommunikationsvorrichtung, die dazu konfiguriert ist, das Kommunikationsverfahren nach einem der Ansprüche 1 bis 13 durchzuführen.

15. Computerlesbares Speichermedium, das dazu konfiguriert ist, ein Computerprogramm, das Anweisungen umfasst, oder ein Computerprogrammprodukt, das Anweisungen umfasst, zu speichern, wobei die Anweisungen zum Durchführen des Kommunikationsverfahrens nach einem der Ansprüche 1 bis 13 dienen.

## Revendications

1. Procédé de communication, comprenant :
la génération (301) d'une unité de données de protocole de couche physique, PPDU, dans lequel la PPDU comprend un champ de caractéristique prolongé indiquant des informations de configuration d'une première caractéristique d'un dispositif R2, et la première caractéristique est une caractéristique prise en charge par le dispositif R2 mais non prise en charge par un dispositif R1 ; et
l'envoi (302) de la PPDU,
**caractérisée en ce que**
la PPDU comprend également un champ commun hérité et un champ utilisateur hérité, dans lequel le champ commun hérité est destiné à analyser le champ utilisateur hérité, le champ utilisateur hérité indiquant des informations de configuration d'une seconde caractéristique, et la seconde caractéristique est une caractéristique prise en charge à la fois par le dispositif R1 et le dispositif R2 ;
le champ utilisateur hérité est configuré pour être déterminé en analysant le champ commun hérité ; et
les informations de configuration de la seconde caractéristique sont configurées pour être déterminées en analysant le champ utilisateur hérité.

2. Procédé de communication, comprenant :
la réception (302) d'une unité de données de protocole de couche physique, PPDU, dans lequel la PPDU comprend un champ de fonction prolongé indiquant des informations de configuration d'une première caractéristique d'un dispositif R2, et la première caractéristique est une caractéristique prise en charge par le dispositif R2 mais non prise en charge par un dispositif R1 ; et
l'analyse (303) de la PPDU, dans lequel les informations de configuration de la première caractéristique du dispositif R2 sont déterminées en analysant le champ de fonction prolongé, **caractérisée en ce que**
la PPDU comprend également un champ commun hérité et un champ utilisateur hérité, dans lequel le champ commun hérité est destiné à analyser le champ utilisateur hérité, le champ utilisateur hérité indique des informations de configuration d'une seconde caractéristique, et la seconde caractéristique est une caractéristique prise en charge à la fois par le dispositif R1 et le dispositif R2 ;
le champ utilisateur hérité est déterminé en analysant le champ commun hérité ; et
les informations de configuration de la seconde caractéristique sont déterminées en analysant le champ utilisateur hérité.

3. Procédé selon la revendication 1 ou 2, dans lequel le champ de fonction prolongé est un champ de caractéristique prolongé comprenant un sous-champ commun prolongé, le sous-champ commun prolongé comprend des premières informations d'indication et des informations d'indication de caractéristique commune, les premières informations d'indication indiquent si la première caractéristique existe, et les informations d'indication de caractéristique commune indiquent des informations de configuration communes de la première caractéristique ;
le fait de savoir si la première caractéristique existe est déterminé en analysant les premières informations d'indication ; et
les informations de configuration communes de la première caractéristique sont déterminées en analysant les informations d'indication de caractéristique communes.

4. Procédé selon la revendication 1 ou 2, dans lequel le champ de fonction prolongé est un champ de caractéristique prolongé comprenant un sous-champ commun prolongé, le sous-champ commun prolongé comprend des deuxièmes informations d'indication et des informations d'indication de caractéristique commune, les deuxièmes informations d'indication indiquent si le dispositif R2 configure la première caractéristique, et les informations d'indication de caractéristique commune indiquent des informations de configuration communes de la première caractéristique ;
le fait de savoir si le dispositif R2 configure la première caractéristique est déterminé en analysant les deuxièmes informations d'indication ; et
les informations de configuration communes de la première caractéristique sont déterminées en analysant les informations d'indication de caractéristique communes.

5. Procédé selon la revendication 1 ou 2, dans lequel le champ de fonction prolongé est un champ de caractéristique prolongé comprenant un sous-champ commun prolongé, le sous-champ commun prolongé comprend des premières informations d'indication, des deuxièmes informations d'indication, des informations d'indication de caractéristique commune, les premières informations d'indication indiquent si la première caractéristique existe, les deuxièmes informations d'indication indiquent si le dispositif R2 configure la première caractéristique, et les informations d'indication de caractéristique commune indiquent des informations de configuration communes de la première caractéristique ;
le fait de savoir si la première caractéristique existe est déterminé en analysant les premières informations d'indication ; le fait de savoir si le dispositif R2 configure la première caractéristique est déterminé en analysant les deuxièmes informations d'indication ; et
les informations de configuration communes de la première caractéristique sont déterminées en analysant les informations d'indication de caractéristique communes.

6. Procédé selon la revendication 1 ou 2, dans lequel le champ de fonction prolongé est un champ de caractéristique prolongé comprenant un sous-champ utilisateur prolongé ;
le sous-champ utilisateur prolongé comprend des informations d'identification et des informations d'indication de caractéristique utilisateur, les informations d'identification indiquent un dispositif R2, et les informations d'indication de caractéristique utilisateur indiquent les informations de configuration de la première caractéristique du dispositif R2 indiqué par les informations d'identification ;
le dispositif R2 est déterminé en analysant les informations d'identification ; et
les informations de configuration de la première caractéristique du dispositif R2 indiquées par les informations d'identification sont déterminées en analysant les informations d'indication de caractéristique utilisateur.

7. Procédé selon la revendication 1 ou 2, dans lequel le champ de fonction prolongé est un champ de caractéristique prolongé comprenant un sous-champ utilisateur prolongé ;
un dispositif correspondant au sous-champ utilisateur prolongé est séquentiellement le même qu'un dispositif correspondant au champ utilisateur hérité, le dispositif est un dispositif R1 ou un dispositif R2, et le sous-champ utilisateur prolongé comprend un sous-champ utilisateur prolongé du dispositif R1 et un sous-champ utilisateur prolongé du dispositif R2 ;
le sous-champ utilisateur prolongé du dispositif R2 comprend des informations d'indication de caractéristique utilisateur indiquant les informations de configuration de la première caractéristique du dispositif R2 ; et
les informations de configuration de la première caractéristique du dispositif R2 sont déterminées en analysant les informations d'indication de caractéristique utilisateur.

8. Procédé selon la revendication 7, dans lequel un dispositif correspondant au sous-champ utilisateur prolongé est séquentiellement le même qu'un dispositif correspondant au champ utilisateur hérité, comprend :
un dispositif correspondant à au moins un sous-champ utilisateur prolongé est séquentiellement le même qu'un dispositif correspondant à au moins un champ utilisateur hérité.

9. Procédé selon la revendication 1 ou 2, dans lequel le champ de fonction prolongé est un champ de caractéristique prolongé comprenant un sous-champ utilisateur prolongé ;
le sous-champ utilisateur prolongé comprend des informations de localisation et des informations d'indication de caractéristique utilisateur ; et
les informations d'indication de caractéristique utilisateur indiquent les informations de configuration de la première caractéristique du dispositif R2, les informations d'emplacement indiquent un emplacement d'un champ utilisateur hérité correspondant au sous-champ utilisateur prolongé dans le champ utilisateur hérité, le sous-champ utilisateur prolongé et le champ utilisateur hérité correspondant au sous-champ utilisateur prolongé correspondent à un même dispositif R2, les informations de configuration de la première caractéristique du dispositif R2 sont déterminées en analysant les informations d'indication de caractéristique utilisateur, et l'emplacement du champ utilisateur hérité correspondant au sous-champ utilisateur prolongé dans le champ utilisateur hérité est déterminé en analysant les informations d'emplacement ; ou
les informations d'indication de caractéristique utilisateur indiquent les informations de configuration de la première caractéristique du dispositif R2, les informations d'emplacement indiquent un emplacement d'une unité de ressources correspondant au sous-champ utilisateur prolongé, le sous-champ utilisateur prolongé et l'unité de ressources correspondant au sous-champ utilisateur prolongé correspondent à un même dispositif R2, les informations de configuration de la première caractéristique du dispositif R2 sont déterminées en analysant les informations d'indication de caractéristique utilisateur, et l'emplacement de l'unité de ressources correspondant au sous-champ utilisateur prolongé est déterminé en analysant les informations d'emplacement.

10. Procédé selon l'une quelconque des revendications 6 à 9, dans lequel
le sous-champ utilisateur prolongé comprend également des troisièmes informations d'indication indiquant si le dispositif R2 configure la première caractéristique sur la base des informations d'indication de caractéristique utilisateur ; et
le fait de savoir si le dispositif R2 configure la première caractéristique sur la base des informations d'indication de caractéristique utilisateur est déterminé en analysant les troisièmes informations d'indication.

11. Procédé selon l'une quelconque des revendications 6 à 10, dans lequel
le champ de fonction prolongé est un champ de caractéristique prolongé comprenant un sous-champ commun prolongé et le sous-champ utilisateur prolongé, dans lequel le sous-champ commun prolongé est destiné à analyser le sous-champ utilisateur prolongé ; et
le sous-champ utilisateur prolongé est déterminé en analysant le sous-champ commun prolongé.

12. Procédé selon la revendication 11, dans lequel le sous-champ commun prolongé comprend l'une ou plusieurs des informations d'indication de caractéristique commune, des premières informations d'indication, des deuxièmes informations d'indication, des quatrièmes informations d'indication et des cinquièmes informations d'indication ;
les informations d'indication de caractéristique commune indiquent des informations de configuration communes de la première caractéristique, les premières informations d'indication indiquent si la première caractéristique existe, les deuxièmes informations d'indication indiquent si le dispositif R2 configure la première caractéristique, les quatrièmes informations d'indication indiquent un type de sous-champ utilisateur prolongé, et les cinquièmes informations d'indication indiquent si le sous-champ utilisateur prolongé du dispositif R2 est présent ; et
les informations de configuration communes de la première caractéristique sont déterminées en analysant les informations d'indication de caractéristique communes, le fait de savoir si la première caractéristique existe est déterminé en analysant les premières informations d'indication, le fait de savoir si le dispositif R2 configure la première caractéristique est déterminé en analysant les deuxièmes informations d'indication, le type du sous-champ utilisateur prolongé est déterminé en analysant les quatrièmes informations d'indication, et le fait de savoir si le sous-champ utilisateur prolongé du dispositif R2 est présent est déterminé en analysant les cinquièmes informations d'indication.

13. Procédé selon l'une quelconque des revendications 3 à 12, dans lequel
le sous-champ commun prolongé comprend également des premières informations d'utilisateur communes, dans lequel les premières informations d'utilisateur communes indiquent les informations de configuration communes du dispositif R2 correspondant au sous-champ utilisateur prolongé ; et
les informations de configuration communes du dispositif R2 correspondant au sous-champ utilisateur prolongé sont déterminées en analysant les premières informations utilisateur communes.

14. Appareil de communication, configuré pour réaliser le procédé de communication selon l'une quelconque des revendications 1 à 13.

15. Support de stockage lisible par ordinateur, configuré pour stocker un programme informatique comprenant des instructions, ou un produit de programme informatique comprenant des instructions, dans lequel les instructions sont destinées à réaliser le procédé de communication selon l'une quelconque des revendications 1 à 13.
